# EUROPEAN PATENT APPLICATION

(11) **EP 4 823 005 A1**
(43) Date of publication of application: **14.10.2026**
(21) Application number: 24915228.1
(22) Date of filing: 30.12.2024
(51) Int. Cl.: H04B 7/06

(54) **COMMUNICATION CONTROL METHOD AND TERMINAL**

(30) Priority: 03.01.2024 CN 202410010111; 15.03.2024 CN 202410318496
(71) Applicant: Honor Device Co., Ltd., Shenzhen, Guangdong 518040 (CN)
(72) Inventor: MA, Hongyang, Shenzhen, Guangdong 518040 (CN); HAO, Yixiu, Shenzhen, Guangdong 518040 (CN); HOU, Tianyi, Shenzhen, Guangdong 518040 (CN)
(74) Representative: Henselmann, Alexander Gerhard
(86) International application number: PCT/CN2024/143735
(87) International publication number: WO 2025/146014

(57) **Abstract**

Embodiments of this application provide a communication control method and a terminal. In the method, when it is determined that a wireless access point AP (such as a router) is a faulty AP that causes a low network speed when the AP sends information to a terminal by using a transmit beamforming (transmit Beamforming, TxBF technology) function, TxBF functions of the faulty AP and the STA are disabled, so that the faulty AP can send the information to the terminal without using the TxBF technology, thereby ensuring that the terminal can normally receive the information.

## Description

This application claims priority to Chinese Patent Application No. 202410010111.4, filed with the China National Intellectual Property Administration on January 3, 2024 and entitled "METHOD FOR DISABLING CONTROL FUNCTION AND ELECTRONIC DEVICE", and Chinese Patent Application No. 202410318496.0, filed with the China National Intellectual Property Administration on March 15, 2024, and entitled "COMMUNICATION CONTROL METHOD AND TERMINAL", both of which are incorporated herein by reference in their entireties.

### TECHNICAL FIELD

This application relates to the field of terminals and communication technologies, and in particular, to a communication control method and a terminal.

### BACKGROUND

Beamforming (Beamforming) is a technology that uses an antenna array to improve transmission quality of wireless signals. In conventional wireless transmission, signals are radiated uniformly, which is equivalent to transmitting signals in all directions. The beamforming technology can enhance concentration and focus of signal energy in a specific direction by coordinating signals between a transmit end and a receive end, thereby improving signal strength and focus. By forming an array with multiple antennas, the beamforming technology may adjust a transmission time sequence and a phase relationship between antennas, to accurately focus a signal in a specific direction. In this way, the receive end can better receive the signal from the transmit end, while interference and attenuation of the signal along a transmission path are reduced. The beamforming technology increases a transmission distance of the signal and increases a data transmission rate.

The beamforming technology is a general-purpose technology that can be applied at the transmit end and/or the receive end. The beamforming technology with the transmit end and receive end specified is referred to as a transmit beamforming (transmit Beamforming, TxBF) technology. The TxBF technology means that the transmit end uses multiple antennas and corresponding algorithms to adjust a direction and power distribution of a to-be-sent signal, to maximize received strength and quality of the sent signal. It may be understood that an objective of the TxBF technology is to optimize transmission performance of the signal sent by the transmit end, thereby improving the strength and quality of the signal received at the receive end.

### SUMMARY

Embodiments of this application provide a communication control method and a terminal to optimize use of a TxBF technology.

In some embodiments of this application, when it is determined that a wireless access point AP (such as a router) is a faulty AP that causes a low network speed when the AP sends information to a terminal by using a transmit beamforming (transmit Beamforming, TxBF) technology, TxBF function(s) of the faulty AP and/or a STA (for example, the terminal) is disabled, so that the faulty AP can send the information to the terminal without using the TxBF technology, thereby ensuring that the terminal can normally receive the information.

Beamforming is a signal precoding technology based on omnidirectional antennas. Based on a principle of signal superposition, phases of signals sent by multiple antennas are adjusted to control a direction and energy intensity of signal propagation ("directional beam"), so that a demodulation signal-to-noise ratio at a receive end is increased.

In beamforming, multiple wave sources (that is, an antenna array) can concentrate electromagnetic radiation/reception gains in one direction (that is, where a receiver or transmitter is located) by carefully controlling relative phases and amplitudes of waves transmitted/received by the wave sources, while minimizing electromagnetic radiation/reception gains in other directions (that is, reducing interference to other receivers or decreasing likelihood of being interfered with by other transmitters). A receive antenna array is used as an example. For an electromagnetic wave propagating in a desired direction, the wavefront arrives at each antenna in the antenna array at a different time (phase). For each antenna, a specific phase delay is added to compensate for a difference between wavefront arrival phases at the antennas. Therefore, after this phase delay, signals received by each antenna are aligned in phase, so that an amplitude is significantly increased after wanted signals received by different antennas are combined. On the other hand, when interference signals propagating in other directions arrive at the antenna array, a delay corresponding to each antenna does not match time-of-arrival differences of the signals at the antennas, so that an amplitude does not increase after the signals are combined. In this way, the antenna array can equivalently function as a directional antenna by using multiple ordinary antennas with specific delays. Based on a principle of antenna reciprocity, the same architecture may also be used in a transmit antenna array, so that the transmit antenna array is equivalent to a highly directional antenna. In addition, a radiation direction of an antenna may be achieved by changing a relative delay and amplitude between wave sources, so that a change of a relative position between a transmit end and a receive end can be easily tracked.

The beamforming technology is widely applied in wireless communication systems, and especially in wireless local area networks (WLANs) and mobile communication systems. By optimizing a transmission direction and strength of signals, beamforming can improve signal coverage and interference resistance, and increase a network capacity, thereby providing more reliable and efficient wireless connections; and by controlling a beam direction, can enhance a coverage distance and signal strength toward a STA.

According to a first aspect, an embodiment of this application provides a communication control method, applied to a terminal. The terminal supports a preset bandwidth and a transmit beamforming TxBF technology. The method includes: receiving, by the terminal, a probe response frame sent by a router, where the probe response frame carries an organization unique identifier OUI of the router and a bandwidth supported by the router being a first bandwidth, and the router supports the preset bandwidth and supports the TxBF technology; when the OUI is a preset OUI and the first bandwidth is equal to the preset bandwidth, sending, by the terminal, a first association request frame to the router; and receiving, by the terminal, a first association response frame sent by the router in response to the first association request frame, where the first association request frame carries first indication information, where the first indication information is used to indicate that a maximum bandwidth supported by the terminal is the preset bandwidth and that the terminal does not support the TxBF technology; or the first indication information is used to indicate that a maximum bandwidth supported by the terminal is a second bandwidth and that the terminal supports the TxBF technology, where the second bandwidth is less than the preset bandwidth.

In the foregoing embodiment, when the TxBF technology is used for data transmission, for example, the router is a transmit end and the terminal is a receive end. The preset OUI is an OUI corresponding to a manufacturer of a faulty AP. When the OUI of the router that supports the preset bandwidth (for example, a 160 MHz bandwidth) and the TxBF technology is the preset OUI and the terminal is notified that the router supports the preset bandwidth (for example, the 160 MHz bandwidth), the router may be a faulty AP that cannot use the TxBF technology normally within the 160 MHz bandwidth. To prevent the terminal from entering a problem scenario in which a fault occurs once the TxBF technology is used within the 160 MHz bandwidth, the terminal that originally supports both the TxBF technology and the 160 MHz bandwidth may falsely report, by using an association request frame (first association request frame) during connection establishment, that the terminal does not support TxBF or the 160 MHz bandwidth, thereby causing the router not to use TxBF and the 160 MHz bandwidth simultaneously either when the router learns, from the first association request frame, that the terminal does not support TxBF and the 160 MHz bandwidth simultaneously. In this way, the terminal does not enter the problem scenario. This belongs to process optimization in a connection establishment phase to prevent potential faults.

With reference to the first aspect, in some embodiments, the first association response frame carries second indication information; and when the first indication information is used to indicate that the maximum bandwidth supported by the terminal is the preset bandwidth and that the terminal does not support the TxBF technology, the second indication information is used to indicate that a maximum bandwidth supported by the router is the preset bandwidth and that the router does not support the TxBF technology; or when the first indication information is used to indicate that the maximum bandwidth supported by the terminal is the second bandwidth and that the terminal supports the TxBF technology, the second indication information is used to indicate that a maximum bandwidth supported by the router is the second bandwidth and that the router supports the TxBF technology.

In the foregoing embodiment, when the router learns, from the first association request frame, that the terminal does not support TxBF and the 160 MHz bandwidth simultaneously, the router does not use TxBF and the 160 MHz bandwidth simultaneously either. The router responds to the terminal with an association response frame (first association response frame), and controls a negotiated bandwidth to be the same as the bandwidth indicated by the terminal by using the first association request frame and a negotiated TxBF capability also to be consistent with the TxBF capability indicated by the terminal by using the first association request frame. In this way, in a subsequent communication process, normal data transmission can be implemented based on the negotiated bandwidth and TxBF capability.

With reference to the first aspect, in some embodiments, before the sending, by the terminal, a first association request frame to the router, the method further includes: determining, by the terminal, that the probe response frame further carries information used to indicate that the router supports the TxBF technology.

In the foregoing embodiment, once the probe response frame carries the information used to indicate that the router supports the TxBF technology, it can be further determined that the router is a faulty AP. However, the probe response frame may not carry the information used to indicate that the router supports the TxBF technology. Even if information indicating whether the router supports 160 MHz is not carried, the communication control method provided in this embodiment of this application can be used. Even if the router is an AP that does not support the TxBF technology, implementing the communication control method provided in this embodiment of this application does not bring negative benefits.

According to a second aspect, an embodiment of this application provides a communication control method. The terminal supports a preset bandwidth and a transmit beamforming TxBF technology. The method includes: establishing, by the terminal, a first connection to a router, where the router supports the preset bandwidth and supports the TxBF technology, and when the terminal receives, through the first connection, data sent by the router, the TxBF technology of the terminal is in an enabled state, and a maximum bandwidth used by the terminal is the preset bandwidth; when a first condition is met, sending, by the terminal, a first reassociation request frame to the router, where the first condition includes that communication quality between the terminal and the router is lower than a preset level; and receiving, by the terminal, a first reassociation response frame sent by the router in response to the first reassociation request frame, where the first reassociation request frame carries third indication information, where the third indication information is used to indicate that a maximum bandwidth supported by the terminal is the preset bandwidth and that the terminal does not support the TxBF technology; or the third indication information is used to indicate that a maximum bandwidth supported by the terminal is a second bandwidth and that the terminal supports the TxBF technology, where the second bandwidth is less than the preset bandwidth.

In the foregoing embodiment, same as in the first aspect, when the TxBF technology is used for data transmission, for example, the router is a transmit end and the terminal is a receive end. A difference from the first aspect lies in that, in the second aspect, during a communication process, the terminal finds that a network speed is low (it may be understood that the terminal has entered a problem scenario), and reasonably suspects that the router is a faulty AP. Then, based on a reassociation process, a TxBF capability and a maximum bandwidth are renegotiated to enable the terminal to exit the problem scenario. A negotiation manner is that the terminal falsely reports, by using a reassociation request frame (first reassociation request frame), that the terminal does not support TxBF or a 160 MHz bandwidth, thereby causing the router not to continue to use TxBF and the 160 MHz bandwidth simultaneously either when the router learns, from the first reassociation request frame, that the terminal does not support TxBF and the 160 MHz bandwidth simultaneously.

With reference to the second aspect, in some embodiments, the first reassociation response frame carries fourth indication information; and when the third indication information is used to indicate that the maximum bandwidth supported by the terminal is the preset bandwidth and that the terminal does not support the TxBF technology, the fourth indication information is used to indicate that a maximum bandwidth supported by the router is the preset bandwidth and that the router does not support the TxBF technology; or when the third indication information is used to indicate that the maximum bandwidth supported by the terminal is the second bandwidth and that the terminal supports the TxBF technology, the fourth indication information is used to indicate that a maximum bandwidth supported by the router is the second bandwidth and that the router supports the TxBF technology.

In the foregoing embodiment, when the router learns, from the first reassociation request frame, that the terminal does not support TxBF and the 160 MHz bandwidth simultaneously, the router does not use TxBF and the 160 MHz bandwidth simultaneously either. The router responds to the terminal with a reassociation response frame (first reassociation response frame), and controls a negotiated bandwidth to be the same as the bandwidth and a negotiated TxBF capability also to be consistent. In this way, in a subsequent communication process, normal data transmission can be implemented based on the negotiated bandwidth and TxBF capability.

With reference to the second aspect, in some embodiments, after the receiving, by the terminal, a first reassociation response frame sent by the router, the method further includes: establishing, by the terminal, a second connection to the router, where when the third indication information is used to indicate that the maximum bandwidth supported by the terminal is the preset bandwidth and that the terminal does not support the TxBF technology, when data sent by the router is received through the second connection, a TxBF function of the terminal is in a disabled state, and the maximum bandwidth used by the terminal is the preset bandwidth; or when the third indication information is used to indicate that the maximum bandwidth supported by the terminal is the second bandwidth and that the terminal supports the TxBF technology, when data sent by the router is received through the second connection, a TxBF function of the terminal is in an enabled state, and the maximum bandwidth used by the terminal is the second bandwidth.

With reference to the second aspect, in some embodiments, before the establishing, by the terminal, a first connection to the router, the method further includes: receiving, by the terminal, a probe response frame sent by the router, where the probe response frame carries an organization unique identifier OUI of the router and a bandwidth supported by the router being a first bandwidth; sending, by the terminal, a second association request frame to the router; and receiving, by the terminal, a second association response frame sent by the router in response to the second association request frame, where the second association request frame carries fifth indication information, where the fifth indication information is used to indicate that the maximum bandwidth supported by the terminal is the preset bandwidth and that the terminal supports the TxBF technology.

In the foregoing embodiment, a cause for entering the problem scenario by the terminal and the router is: the router is a faulty AP, but during the bandwidth negotiation, it is negotiated that the router uses the TxBF technology and the 160 MHz bandwidth simultaneously. It should be noted that the cause is not limited to the one mentioned herein and may alternatively be other causes. For example, the router is originally a faulty AP but is not recognized by the terminal; however, it is negotiated again that the router uses the TxBF technology and the 160 MHz bandwidth simultaneously when reassociation is performed due to factors other than a low network speed; then the router enters the problem scenario and the network speed is low, and the terminal recognizes the router as a faulty AP; and then reassociation may be performed again to negotiate that the TxBF technology and the 160 MHz bandwidth are not used simultaneously.

With reference to the second aspect, in some embodiments, the first condition further includes that the OUI of the router is a preset OUI and that the first bandwidth is equal to the preset bandwidth.

In the foregoing embodiment, in addition to the low network speed, the first condition may further include more information to further determine that the router is a faulty AP. For example, the router is produced by a preset manufacturer, or the router supports the preset bandwidth.

With reference to the second aspect, in some embodiments, before the first condition is met, the method further includes: when determining, based on the probe response frame, that the OUI of the router is the preset OUI and that the first bandwidth is equal to the preset bandwidth, performing, by the terminal, network detection based on a first frequency after establishing the first connection, and determining that communication quality between the terminal and the router is lower than a preset level, where the first frequency is greater than a second frequency, and the second frequency is a frequency at which the terminal performs network detection before receiving the probe response frame.

With reference to the second aspect, in some embodiments, the method further includes: before determining that the first condition is met, receiving, by the terminal through the first connection, a request to send frame sent by the router, where the request to send frame is used to request to use the preset bandwidth to send a first data packet to the terminal; and sending, by the terminal, a clear to send frame to the router through the first connection, where the clear to send frame is used to notify the router to use the second bandwidth to send the first data packet.

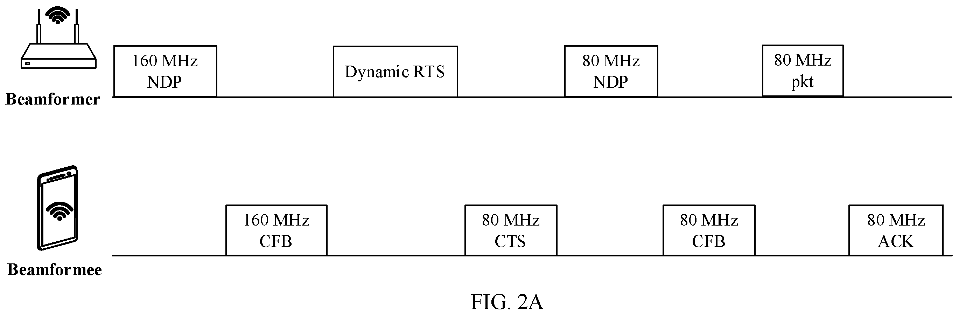

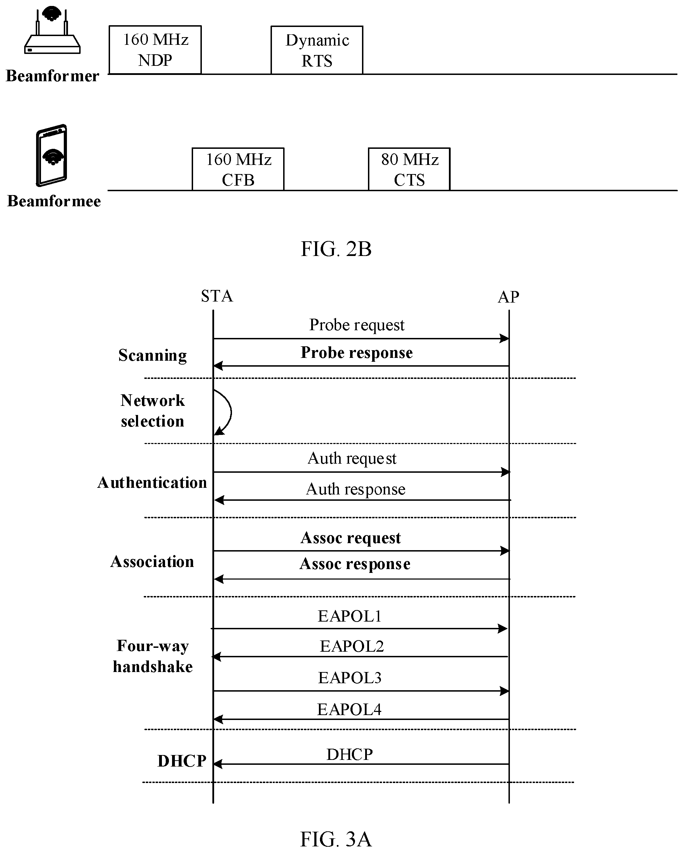

In the foregoing embodiment, a cause of the problem scenario includes: after the first connection is established, the terminal and the router modify, by using the RTS (request to send frame) and the CTS (clear to send frame) (referring to FIG. 2B and FIG. 2A and related descriptions thereof), the bandwidth for transmitting the data packet from the negotiated maximum bandwidth to a bandwidth less than the negotiated bandwidth. Occurrence of this cause can sufficiently indicate that the router is a faulty AP.

With reference to the second aspect, in some embodiments, that communication quality between the terminal and the router is lower than a preset level specifically includes: after the terminal sends the clear to send frame to the router, the terminal does not receive the first data packet within a preset time.

In the foregoing embodiment, if the request to send frame and the clear to send frame for sending the first data packet exist, and the negotiated bandwidth for transmitting the first data packet is not the negotiated maximum bandwidth but a bandwidth less than the maximum bandwidth, and the first data packet is not received after a long time, it can more sufficiently indicate that the router is a faulty AP.

With reference to the second aspect, in some embodiments, that communication quality between the terminal and the router is lower than a preset level specifically includes: the terminal determines that a packet loss rate of a second data packet is greater than a preset packet loss rate, where the second data packet is a data packet received by the terminal through the first connection.

With reference to the second aspect, in some embodiments, the preset bandwidth is the 160 MHz bandwidth.

With reference to the second aspect, in some embodiments, the second bandwidth is one of an 80 MHz bandwidth, a 40 MHz bandwidth, or a 20 MHz bandwidth.

According to a third aspect, an embodiment of this application provides a communication control method. In some embodiments, the method includes: when an organization unique identifier OUI of a router to which a terminal (for example, a mobile phone) is connected is a preset OUI and a bandwidth of the router is a preset bandwidth (for example, when the terminal determines that the organization unique identifier OUI of the connected router is the preset OUI and that the bandwidth of the router is the preset bandwidth, determining that the router is a faulty router), disabling, by the terminal, a transmit beamforming TxBF function supported within the preset bandwidth, and sending a first packet to the router in a first manner, where the first manner does not use a transmit beamforming TxBF technology supported within the preset bandwidth to send the first packet; and receiving, by the terminal, a response sent by the router for the first packet, where the response for the first packet is sent in the first manner supported by the router.

In the foregoing embodiment, some routers use the TxBF technology within the preset bandwidth to send messages (packets) to the terminal, which may cause problems, such as a problem that the messages cannot be sent to the terminal. To resolve this problem, the TxBF function of the terminal within the preset bandwidth may be disabled, and the first manner (TxBF technology within a non-preset bandwidth) is used, so that the router also disables the TxBF function within the preset bandwidth. Therefore, the terminal and the router do not use the TxBF technology within the preset bandwidth for interaction, and the problem that messages cannot be received does not occur.

When some routers communicate with mobile phones, problems occur, making users unable to access the Internet. In some embodiments, in a scenario in which a mobile phone side recognizes a specific router, a specific bandwidth, and/or a specific protocol type, the TxBF function on the mobile phone side may be dynamically disabled. During a connection process, the mobile phone notifies the router that the current mobile phone does not support the TxBF technology, and the router disables the TxBF function. In this way, no problem occurs during communication between the two parties.

With reference to the third aspect, in some embodiments, the sending a first packet to the router in a first manner specifically includes: sending the first packet by using the TxBF technology supported within a first bandwidth.

With reference to the third aspect, in some embodiments, the sending a first packet to the router in a first manner specifically includes: sending the first packet to the router, and not using the TxBF technology to adjust the first packet during sending.

With reference to the third aspect, in some embodiments, before determining that the router is a faulty router, the method further includes: determining, by the terminal based on a preset rule, that a network speed of the router is low.

With reference to the third aspect, in some embodiments, the preset rule includes: the terminal sends a second packet to the router, and does not receive, within a first preset time, a response sent by the router for the second packet.

With reference to the third aspect, in some embodiments, the preset rule includes: after sending at least one packet to the router, the terminal does not receive, within a second preset time, a packet sent by the router.

With reference to the third aspect, in some embodiments, a packet loss occurs in packets sent by the router and received by the terminal.

With reference to the third aspect, in some embodiments, the preset bandwidth is a 160 MHz bandwidth.

With reference to the third aspect, in some embodiments, the first bandwidth is one of an 80 MHz bandwidth, a 40 MHz bandwidth, or a 20 MHz bandwidth.

According to a fourth aspect, an embodiment of this application provides a terminal. The terminal includes one or more processors and a memory. The memory is coupled to the one or more processors. The memory is configured to store computer program code. The computer program code includes computer instructions. The one or more processors invoke the computer instructions, so that the terminal performs the method implemented in the first aspect.

According to a fifth aspect, an embodiment of this application provides a computer-readable storage medium, including instructions. When the instructions are run on a terminal, the terminal is enabled to perform the method implemented in the first aspect, the second aspect, or the third aspect.

According to a sixth aspect, an embodiment of this application provides a chip system. The chip system is applied to a terminal. The chip system includes one or more processors. The processor is configured to invoke computer instructions, so that the terminal performs the method implemented in the first aspect, the second aspect, or the third aspect. The chip system may be an SoC (system-on-chip, system-level chip). The processor may include a modem processor (also known as a modem or baseband chip).

According to a seventh aspect, an embodiment of this application provides a computer program product including instructions. When the computer program product runs on a terminal, the terminal is enabled to perform the method implemented in the first aspect, the second aspect, or the third aspect.

It may be understood that the terminal provided in the fourth aspect, the computer storage medium provided in the fifth aspect, the chip system provided in the sixth aspect, and the computer program product provided in the seventh aspect are all configured to perform the method provided in the embodiments of this application. Therefore, for other beneficial effects that can be achieved by the terminal, the computer storage medium, the chip system, and the computer program product, refer to the beneficial effects in the corresponding method. Details are not described herein again.

### BRIEF DESCRIPTION OF DRAWINGS

FIG. 1 is a schematic diagram showing spatial holes and a beamforming technology in signal propagation;
FIG. 2A is a schematic diagram of a normal process of signal transmission completed by an AP by using a TxBF function;
FIG. 2B is a schematic diagram of an abnormal process of signal transmission completed by using a TxBF function;
FIG. 3A is a flowchart of connection establishment between an AP and a STA;
FIG. 3B is a schematic diagram of a reassociation process;
FIG. 4 is a schematic diagram for disabling a TxBF function based on an association phase in manner 1;
FIG. 5 is a schematic diagram for disabling a 160 MHz bandwidth based on an association phase in manner 2;
FIG. 6 is a schematic diagram for disabling a TxBF function based on a reassociation phase in manner 3;
FIG. 7 is a schematic diagram for disabling a 160 MHz bandwidth based on a reassociation phase in manner 4;
FIG. 8 is an exemplary flowchart related to a manner 1;
FIG. 9 shows an exemplary data transmission process after a TxBF function is disabled;
FIG. 10 is an exemplary flowchart related to a manner 2;
FIG. 11A shows an exemplary data transmission process after a 160 MHz bandwidth is disabled;
FIG. 11B shows another exemplary data transmission process after a 160 MHz bandwidth is disabled;
FIG. 12A is an exemplary flowchart related to a manner 3;
FIG. 12B shows an exemplary data transmission process after a TxBF function is disabled based on a reassociation;
FIG. 13A is an exemplary flowchart related to a manner 4;
FIG. 13B shows an exemplary data transmission process after a 160 MHz bandwidth is disabled based on a reassociation;
FIG. 14 is an exemplary block diagram of a structure of a terminal; and
FIG. 15 is a schematic diagram of a structure of a terminal according to an embodiment of this application.

### DESCRIPTION OF EMBODIMENTS

In a solution, an access point AP (for example, a Wi-Fi device such as a router) uses an omnidirectional antenna, which theoretically sends signals uniformly in all directions with the antenna as a center. However, in a practical application, due to multipath, scattering, diffraction, and other factors caused by obstacles, strength of Wi-Fi signals propagated by the AP in different directions is not the same. A purpose of using a beamforming (beamforming) technology by the AP is to calculate steering matrix (steering matrix) coefficients through interaction between the AP and a station STA (for example, a terminal device such as a mobile phone). The AP can control, by using a steering matrix, strength and phases of signals sent by different antennas, to achieve an objective of enhancing Wi-Fi signals, so that the strength and quality of the Wi-Fi signals received by the STA are better.

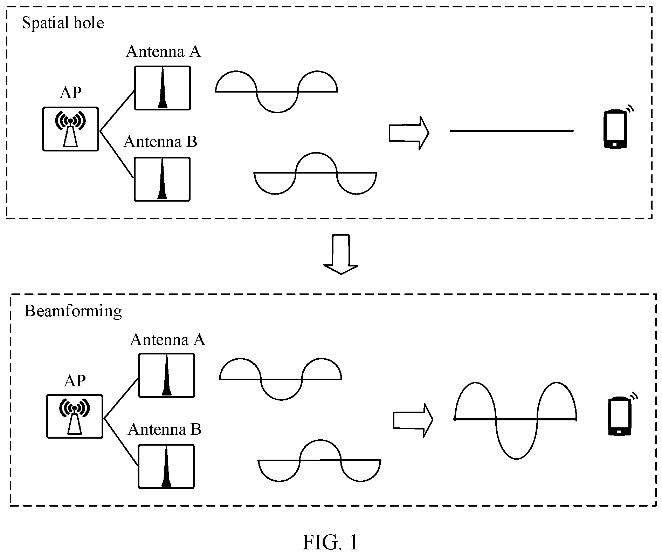

With reference to FIG. 1, the beamforming technology can reduce signal (for example, Wi-Fi signal) attenuation caused by spatial holes and enhance signal strength and quality.

The spatial holes refer to a phenomenon in which strength of a signal is weak or a signal cannot arrive in some areas or directions in a signal propagation process. The spatial holes may be caused by factors such as signal multipath propagation, attenuation, and blocking by obstacles. The spatial holes cause signal quality degradation and even cause a problem such as a transmission interruption or a signal loss.

When the AP sends a signal, the spatial holes have direct impact on coverage and a transmission distance of the signal. If there are a large quantity of spatial holes in a Wi-Fi network, a signal transmission effect in these areas is affected, and a STA may not be able to receive a stable signal. For example, as shown in FIG. 1, the AP uses an antenna A and an antenna B to send a Wi-Fi signal to the STA. If the spatial holes are larger, quality of the signal received by the STA is lower (severe attenuation) or even the signal cannot be received.

However, when the signal is sent by using the beamforming technology, a transmission range and quality of the signal can be improved. Concentrating signal energy in a required direction can reduce diffusion and attenuation of the signal in space, and improve reception sensitivity and coverage of the signal, thereby increasing a wireless connection speed and improving stability. For example, as shown in FIG. 1, when the AP uses the antenna A and the antenna B to send a signal processed by using the beamforming technology to the STA, a phase and an amplitude of the signal may be adjusted to form a directional beam, concentrating signal energy on the STA.

It should be noted that the beamforming technology is a general-purpose technology that can be applied at a transmit end and/or a receive end. The beamforming technology with the transmit end and receive end specified is referred to as a transmit beamforming (transmit Beamforming, TxBF) technology.

When the STA supports the beamforming technology, the AP can use the beamforming technology to transmit the signal to the STA. This means that the AP supports the TxBF technology. When the STA can correctly receive and process the signal sent by the AP by using the beamforming technology, it means that the STA also supports the TxBF technology. It may also be understood that the beamforming technology used by the transmit end may be referred to as the TxBF technology. The transmit end (for example, the AP) uses the TxBF technology to send the signal to the receive end (for example, the STA), thereby improving the transmission strength and quality of the signal. The receive end (such as the STA) needs to support the TxBF technology to correctly receive and process the signal sent by using the TxBF technology.

Herein, when the TxBF technology is used for data transmission mentioned later, the AP is the transmit end and may also be referred to as a beamformer (beamformer). The STA is the receive end, and may also be referred to as a beamformee (beamforming receive end).

When the TxBF technology is used for data transmission between an AP and a STA that originally both support the TxBF technology, transmission quality can be improved. However, in a practical application, a faulty AP is found, and due to an internal bug, the faulty AP causes a low network speed problem when using the TxBF technology to send information to a STA. Consequently, a signal received by the STA is poor or no signal can be received.

A cause of the low network speed problem may include the following content.

In a connection establishment process, the STA and the AP negotiate a maximum bandwidth supported by both parties for data transmission and whether to support TxBF during data transmission. In the connection establishment process, if use of TxBF to transmit data is negotiated, both parties use TxBF when transmitting data. The maximum bandwidth supported by both parties means that a bandwidth used during data transmission needs to be less than or equal to the maximum bandwidth. Usually, the bandwidth used during data transmission (transmission bandwidth) is the negotiated maximum bandwidth. However, the maximum bandwidth is not necessarily used during data transmission, because after a connection is established, a manner is provided to change the transmission bandwidth from the maximum bandwidth to other bandwidths (less than the maximum bandwidth) to implement data transmission by using the other bandwidths. The bandwidth change manner includes: the STA further determines, based on factors such as channel quality and usage, whether to change the bandwidth.

If the bandwidth is changed, the AP is notified of a changed available bandwidth (less than the negotiated maximum bandwidth) by using a clear to send (clear to send, CTS) frame. If the negotiated maximum bandwidth is available, the AP and the STA can use the maximum bandwidth when performing data transmission. Based on this, after the STA establishes a connection to the AP, if the AP expects to use the maximum bandwidth and TxBF to send data to the STA, the AP needs to send a request to send (Request To Send, RTS) frame to the STA, to request to send data to the STA by using TxBF within the maximum bandwidth. After receiving the RTS frame, the STA detects whether a channel with the maximum bandwidth is available, and if no, detects an available channel. Then an available bandwidth for this data transmission is determined based on a detection result. The available bandwidth is carried in a clear to send (clear to send, CTS) frame and fed back to the AP. The AP parses the CTS frame to obtain the available bandwidth and then sends data to the STA on a channel with the available bandwidth, so that the data transmission succeeds. However, when the maximum bandwidth is a preset bandwidth (for example, 160 MHz), and when the AP requests, by using a request to send frame, to send a signal (for example, a data packet) to the STA by using the TxBF technology on a channel with the preset bandwidth, the STA detects that the channel with the preset bandwidth is unavailable, and determines that the available bandwidth is a non-preset bandwidth (for example, 80 MHz). Then the STA notifies the AP, by using a clear to send frame, to use the TxBF technology to send a signal on a channel with the non-preset bandwidth. However, due to the internal bug, the AP cannot normally respond to the clear to send frame, resulting in abnormal data transmission. For a detailed description of this process, refer to the following FIG. 2B.

The sending a signal by using the TxBF technology on a channel with the preset bandwidth means sending a signal processed by using the TxBF technology on the channel with the preset bandwidth. It may also be understood as using the preset bandwidth and the TxBF technology to send data.

The preset bandwidth is a bandwidth that may cause a problem scenario, and is usually a 160 MHz bandwidth, but not limited to the 160 MHz bandwidth. For example, if an 80 MHz bandwidth also causes a problem scenario, the 80 MHz bandwidth may also be a preset bandwidth.

The following uses the preset bandwidth of 160 MHz as an example for description. For descriptions of the low network speed problem caused by the AP due to the internal bug when the TxBF technology is used to send information to the STA, refer to FIG. 2A and FIG. 2B. The data transmission process is described in FIG. 2A and FIG. 2B. It should be noted that the connection needs to be established before the data transmission is performed. For the process of negotiating the bandwidth and TxBF during connection establishment, refer to the following description of FIG. 3A. FIG. 2A and FIG. 2B use the negotiated maximum bandwidth of 160 MHz and support for TxBF as an example to describe the low network speed problem.

FIG. 2A shows a normal process of packet transmission completed by the AP by using the TxBF technology. The AP, as a beamformer (beamformer), sends a null data packet (NULL data packet, NDP) on a channel with a 160 MHz bandwidth to the STA as a beamformee (beamforming receive end), for channel measurement. The NDP is further used to notify the STA that the AP will use the TxBF technology to send a signal on the channel with the 160 MHz bandwidth. The NDP may be referred to as a 160 MHz NDP. After receiving the 160 MHz NDP, the STA, as the beamformee, measures the channel with the 160 MHz bandwidth, calculates a signal-to-noise ratio (signal-to-noise ratio, SNR) and steering matrix (Steering Matrix) coefficients of the channel with the 160 MHz bandwidth, includes the SNR and the steering matrix coefficients into a compressed feedback (compressed feedback, CFB), and sends the CFB (an action frame) to the AP on the channel with the 160 MHz bandwidth. Subsequently, the AP receives the CFB fed back by the STA, and adjusts strength and a phase of a to-be-sent signal. The AP sends a dynamic (Dynamic) RTS (Request To Send, request to send) to the STA. "Dynamic" means that a channel used by the AP to send the RTS to the STA may be dynamically adjusted based on channel quality. This means that the AP can send the RTS to the STA on a channel with better quality rather than the channel with the maximum bandwidth.

With continued reference to FIG. 2A, after receiving the dynamic RTS, the STA starts channel detection. A detection result is as follows: The STA detects that the channel with the 160 MHz bandwidth is unavailable and that a channel with an 80 MHz bandwidth is available. Then the STA replies to the AP with an 80 MHz CTS (Clear To Send, clear to send) on the channel with the 80 MHz bandwidth. The 80 MHz CTS is used to notify the AP to use the TxBF technology to send a signal on the channel with the 80 MHz bandwidth. The AP finds that the bandwidth supported by the STA is not the negotiated maximum bandwidth of 160 MHz, but 80 MHz. The AP resends an NDP (referred to as an 80 MHz NDP) on the channel with the 80 MHz bandwidth to the beamformee for channel measurement. The 80 MHz NDP is further used to notify the STA that the AP will use the TxBF technology to send a signal on the channel with the 80 MHz bandwidth. After receiving the 80 MHz NDP, the STA measures the channel with the 80 MHz bandwidth, calculates an SNR and steering matrix coefficients of the channel with the 80 MHz bandwidth, and sends the SNR and steering matrix coefficients to the AP by using a CFB on the channel with the 80 MHz bandwidth. The AP receives the CFB fed back by the STA, uses the TxBF technology to adjust strength and a phase of a to-be-sent signal (data packet, data packet), and then sends the adjusted signal to the STA on the channel with the 80 MHz bandwidth. After receiving the data packet, the STA sends an acknowledgment (ACK) packet to the AP on the channel with the 80 MHz bandwidth. Up to now, the beamformer and beamformee have completed data transmission once by using TxBF.

With reference to FIG. 2A, it can be concluded that when the negotiated maximum bandwidth is 160 MHz, if the AP needs to send a data packet (data packet) to the STA on the channel with the 160 MHz bandwidth, the AP first needs to receive the steering matrix coefficients of the channel with the 160 MHz bandwidth by using the CFB, and then further needs to receive the CTS permitting data sending on the channel with the 160 MHz bandwidth. In this way, the STA can use TxBF to send the data packet on the channel with the 160 MHz bandwidth. If the available bandwidth indicated in the CTS is a bandwidth 1 (for example, 80 MHz) other than 160 MHz, the steering matrix coefficients of the channel with the 160 MHz bandwidth are unavailable. In this case, the AP needs to obtain steering matrix coefficients of a channel with the bandwidth 1 by using an NDP again, and can use TxBF to send a data packet on the channel with the bandwidth 1 after receiving a CTS permitting data sending on the channel with the bandwidth 1. The maximum bandwidth is not limited to the 160 MHz bandwidth, and the same applies to other bandwidths (such as 80 MHz).

FIG. 2B shows an abnormal process of packet transmission performed by using the TxBF technology. As in the normal process shown in FIG. 2A, the STA changes the available bandwidth from the negotiated maximum bandwidth of 160 MHz to 80 MHz by sending an 80 MHz CTS on the channel with the 80 MHz bandwidth. A process of changing the bandwidth from 160 MHz to 80 MHz includes: the AP, as the beamformer, sends a 160 MHz NDP to the beamformee for channel measurement. The 160 MHz NDP is further used to notify the STA that the AP will use the TxBF technology to send a signal on the channel with the 160 MHz bandwidth. After receiving the 160 MHz NDP, the STA, as the beamformee, measures the channel with the 160 MHz bandwidth and calculates an SNR and steering matrix (Steering Matrix) coefficients of the channel with the 160 MHz bandwidth. The SNR and the steering matrix coefficients are carried in a compressed feedback (compressed feedback, CFB), and the CFB is sent to the AP on the channel with the 160 MHz bandwidth. The AP receives the CFB fed back by the STA, and adjusts strength and a phase of a to-be-sent signal. Then the AP sends a dynamic (Dynamic) RTS. After receiving the dynamic RTS, the STA starts channel detection. A detection result is as follows: The STA detects that the channel with the 160 MHz bandwidth is unavailable and that a channel with an 80 MHz bandwidth is available. Then the STA replies to the AP with an 80 MHz CTS on the channel with the 80 MHz bandwidth. The 80 MHz CTS is used to notify the AP to use the TxBF technology to send a signal on the channel with the 80 MHz bandwidth. Compared with the normal process in FIG. 2A, the AP does not take any specific action after the STA sends the 80 MHz CTS. Therefore, no packet (for example, no data packet) is transmitted.

With reference to the foregoing cause of the low network speed problem, a cause of no subsequent specific action herein may be that the AP has an internal fault. After the STA changes the available bandwidth from the negotiated maximum bandwidth to another bandwidth by using a CTS, the STA cannot process the CTS sent by the STA.

When the abnormal process shown in FIG. 2B occurs, the TxBF technology cannot be successfully used to transmit a packet (for example, a data packet). Consequently, the AP is unable to use the TxBF technology to send a data packet to the STA, and a low network speed problem occurs on the STA.

It should be noted herein that FIG. 2A and FIG. 2B describe the process of data transmission. Before implementing the data transmission shown in FIG. 2A or FIG. 2B, the STA and the AP need to perform the connection establishment process shown in FIG. 3A. The maximum bandwidth (for example, 160 MHz) and the TxBF technology supported by both the STA and the AP during data transmission are negotiated in the connection establishment (referred to as connection establishment, which may also be known as connection establishment) process. For the connection establishment process, refer to the following description of FIG. 3A.

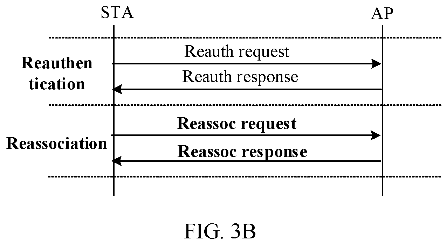

Once the maximum bandwidth and use of the TxBF technology are negotiated in the connection establishment process, with reference to the foregoing related description of FIG. 2A, after the connection is established, the AP may obtain, by using a DNP, the steering matrix coefficients of the channel with the maximum bandwidth and obtain, by using an RTS, permission to send data on the channel with the maximum bandwidth. Then the AP uses the maximum bandwidth and TxBF to transmit data to the STA. If the maximum bandwidth is not used, as shown in FIG. 2A and FIG. 2B, the bandwidth may be changed from the maximum bandwidth to other available bandwidths less than the maximum bandwidth when a CTS is sent, or the bandwidth may be renegotiated when reassociation is performed. During reassociation, it is also possible to renegotiate whether to enable the TxBF technology. For the reassociation, refer to the following description of FIG. 3B. Details are not described herein.

For the negotiation of the bandwidth and whether to enable the TxBF technology during connection establishment, refer to the following description of FIG. 3A.

The connection establishment process includes six phases: a scanning phase, a network selection phase, an authentication phase, an association phase, a four-way handshake phase, and a dynamic host configuration protocol (dynamic host configuration protocol, DHCP) phase. The following describes each phase separately.

First phase: scanning phase, used by the STA to discover surrounding APs and obtain basic information of the APs.

The STA (for example, a terminal such as a mobile phone) sends a probe request (Probe request) frame. The STA sends the probe request frame to search for nearby available wireless network devices. The probe request frame includes a wireless network requirement and parameters of the STA.

**The AP (for example, a router) sends a probe response (Probe response) frame to the STA.** After receiving the probe request frame, the AP sends the probe response frame to the STA, where the probe response frame includes basic information of the AP. The basic information includes the maximum bandwidth supported by the AP and may further include whether the AP supports TxBF.

It should be noted herein that an occasion for the STA to scan surrounding APs includes but is not limited to user-triggered scanning, where when a Wi-Fi enable operation is detected, the STA starts scanning surrounding APs. Alternatively, when the STA detects a location change, the STA triggers active scanning to obtain surrounding APs at a new location.

Second phase: network selection phase.

Based on the received probe response frame, the STA selects a target AP to establish a connection. The selection is usually based on factors such as signal strength and quality.

Third phase: authentication phase, used for identity authentication of the STA.

The STA sends an authentication request (Auth request, Authentication request) frame to the selected STA. The STA sends the Auth request frame to the selected AP for identity authentication. The Auth request frame includes an identity authentication request and related parameters of the STA.

The selected AP sends an authentication response (Auth response) frame to the STA. After receiving the Auth request frame, the AP sends the Auth response frame to the STA to confirm an identity and authority of the STA.

Fourth phase: association phase.

**The STA sends an association request (Assoc request, Association request) frame to the selected AP.** The STA sends the Assoc request frame to the authenticated AP, where the frame includes the identity and related connection parameters of the STA. Related connection parameters of the STA may include the bandwidth supported by the STA, whether TxBF is supported, and the like.

**The selected AP sends an association response (Assoc response) frame to the STA.** After receiving the Assoc request frame, the AP sends the Assoc response frame to the STA to confirm establishment of an association. The Assoc request frame may include related connection parameters of the AP. The related connection parameters of the AP may include the bandwidth supported by the STA, whether TxBF is supported, and the like.

It should be noted that in the Assoc request frame and the Assoc response frame, information about the bandwidth and TxBF is recorded in an HT Capabilities field.

Fifth phase: four-way handshake (Four-Way Handshake), used to establish a secure encrypted session.

This process uses the EAPOL (Extensible Authentication Protocol over LAN) protocol, including EAPOL1 to EAPOL4.

EAPOL1 (EAPOL-Key 1 of 4): The AP sends an EAPOL-Key 1 message to the STA (selected), where the message includes a random number used to establish an encrypted session.

EAPOL2 (EAPOL-Key 2 of 4): The STA sends an EAPOL-Key 2 message to the AP, where the message includes a result of processing the random number sent by the AP.

EAPOL3 (EAPOL-Key 3 of 4): The AP sends an EAPOL-Key 3 message to the STA, where the message includes a random number used to generate a session key and a result of processing the random number sent by the STA.

EAPOL4 (EAPOL-Key 4 of 4): The STA and the AP perform final confirmation and authentication through an EAPOL-Key 4 message to ensure that the encrypted session is successfully established.

Sixth phase: DHCP phase, used by the STA to obtain an IP address assigned by the AP to the STA and other network configuration information. The process includes DHCP discover (Discover), DHCP offer (Offer), DHCP request (Request), and DHCP acknowledgment (ACK).

DHCP Discover: The STA sends a DHCP Discover message by broadcast to discover an available DHCP server.

DHCP Offer: After receiving the DHCP Discover message, the AP sends a DHCP Offer message to the STA, where the DHCP Offer message includes an available IP address and configuration information.

DHCP Request: The STA sends a DHCP Request message to the AP, requesting assignment of a specific IP address and configuration information.

DHCP ACK: The AP sends a DHCP Acknowledgement message to the STA to confirm the IP address and configuration information assigned to the STA.

Based on the foregoing content, it can be learned that after the STA and the AP follow the connection establishment process shown in FIG. 3A, a connection is established and data transmission can be performed. For a scenario of successful data transmission, refer to the foregoing content shown in FIG. 2A. In the connection establishment process, the association phase is a main phase for negotiating the bandwidth and TxBF capabilities. The HT Capabilities field is used to learn a support status of both parties and perform adaptation. For example, when the STA accesses the AP, the STA declares its beamforming (TxBF) capability by using a transmit beamforming capabilities (transmit beamforming capabilities) field in the HT Capability (high throughput capability, high throughput capability). When both the AP and the STA support beamforming (TxBF), the function is enabled.

If the AP supports TxBF and the STA also supports TxBF, and both parties reach an agreement (both support) in the negotiation process in the association phase, the TxBF function may be enabled in the subsequent data transmission process. The same applies to other capabilities negotiated by both parties. For example, if the AP supports the bandwidth 1 and the STA also supports the bandwidth 1, and both parties reach an agreement (both support) in the negotiation process in the association phase, the bandwidth 1 may be enabled in the subsequent data transmission process.

It should be noted that if the negotiated capabilities (such as the bandwidth and TxBF) need to be changed after connection establishment, reassociation may be performed for implementation. As shown in FIG. 3B, in the reassociation phase, the STA may send a reassociation request (Reassoc request) frame to the AP to renegotiate capabilities such as the bandwidth and TxBF. After receiving the Reassoc request frame sent by the STA, the AP may send a reassociation response (Reassoc response) frame to the AP.

Information about the bandwidth and TxBF in the Reassoc request frame and the Reassoc response frame is also recorded in the HT Capabilities field.

Content of the negotiated capability in the Reassoc request frame is the same as that in the foregoing Assoc request frame, and content of the negotiated capability in the Reassoc response frame is the same as that in the foregoing Assoc response frame. Refer to the foregoing related content. Details are not described herein again.

In some possible cases, before the reassociation phase is entered, reauthentication needs to be performed to ensure legal use of a network: The STA sends a reauthentication request (Reauth request) frame to the STA. After receiving the Reauth request frame, the AP sends a reauthentication response (Reauth response) frame to the STA to complete reauthentication.

A communication control method is proposed for the faulty AP in the foregoing solution. In this method, when it is determined that a wireless access point AP (such as a router) may be a faulty AP that causes a low network speed when the AP sends information to a STA (for example, a terminal such as a mobile phone) by using a TxBF technology, TxBF functions of the faulty AP and the STA are disabled. Therefore, the AP can send the information to the STA without using the TxBF technology, thereby ensuring that the terminal can normally receive the information.

Disabling the TxBF function of the AP means that, as a transmit end, the AP does not use the TxBF technology when sending information to the STA. Disabling the TxBF function of the STA means that, as a receive end, the STA does not use the TxBF technology when receiving information sent by the AP.

However, whether the STA as a transmit end and the AP as a receive end use the TxBF function is not limited in this method.

In some possible cases, for the faulty AP, the STA side needs to avoid the problem by first disabling the TxBF function on the STA side to trigger the peer AP to also disable the TxBF function.

In some other possible cases, for the faulty AP, a problem scenario occurs only when the TxBF technology is used within a preset bandwidth. When the STA side avoids the problem by itself, the STA side may not disable the TxBF function but refrain from using the preset bandwidth.

In summary, the avoidance manners include but are not limited to the following manners 1 to 4.

Manner 1: In a connection establishment process, if the STA recognizes that the AP selected for connection establishment may be the faulty AP and that the AP has enabled 160 MHz, the TxBF function on the STA side may be directly disabled.

That 160 MHz has been enabled means that when the AP and the STA negotiate a bandwidth, the AP notifies the STA that the AP supports a 160 MHz bandwidth. That the STA recognizes that the AP selected for connection establishment may be the faulty AP includes: the STA determines that a manufacturer of the AP has produced the faulty AP.

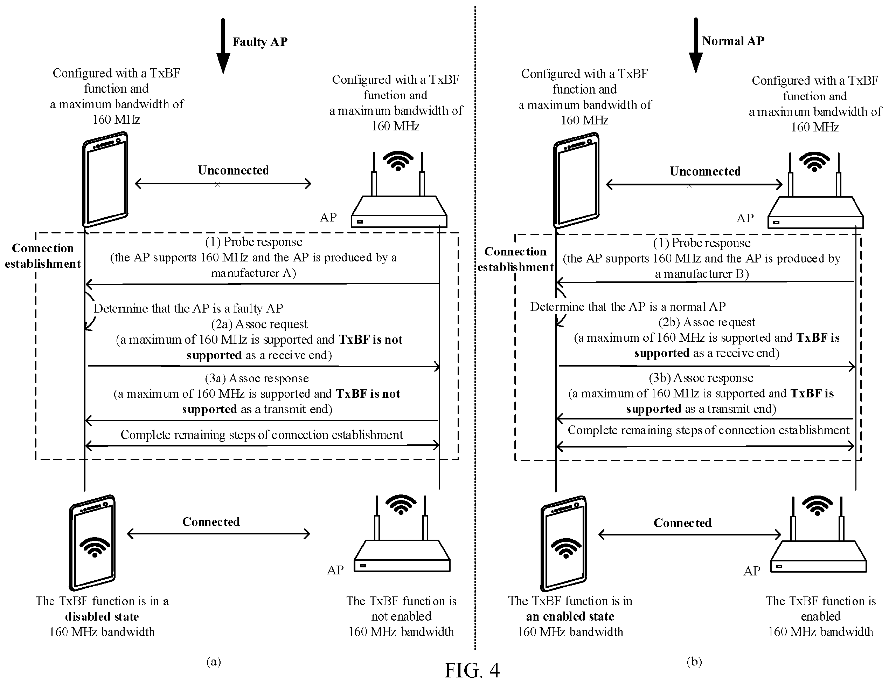

As shown in FIG. 4(a), for the faulty AP and the STA configured with the TxBF function and supporting a maximum bandwidth of 160 MHz, the manner 1 may be implemented during connection establishment. An implementation process of the manner 1 includes the following content.

As shown in (1), the AP notifies the STA by using a probe response frame that the AP supports 160 MHz and that the AP is produced by a manufacturer A. Herein, the STA may determine, based on information about the STA in the probe response frame, whether the AP is the faulty AP.

When the AP is the faulty AP, as shown in (2a), the STA selects to connect to the AP based on the probe response frame and sends an Assoc request frame to the AP. The Assoc request frame is used to notify the AP that the STA supports a maximum of 160 MHz and does not support TxBF as a receive end. As shown in (3a), in response to the Assoc request frame, the AP sends an Assoc response frame to the STA. Herein, the Assoc response frame is used to notify the STA that the AP supports a maximum of 160 MHz and does not support TxBF as a transmit end.

Herein, after the STA notifies the AP in (2a) in FIG. 4 that the STA as the receive end does not support TxBF, the AP originally supporting TxBF is also caused to notify the STA that the AP as the transmit end does not support TxBF. This is because, after the AP side determines that the STA as the receive end does not support TxBF, the AP no longer uses TxBF to send data to the STA, since use of TxBF causes the STA that does not support TxBF to be unable to correctly receive the data sent by using TxBF. To avoid this situation, if the STA as the receive end does not support TxBF, the AP should not enable TxBF either.

Subsequently, the STA and the AP complete remaining steps of connection establishment to establish a connection. After the connection is established, the AP may use a channel with the 160 MHz bandwidth to send data to the STA. The TxBF function is not enabled during data sending. The STA may receive, on the channel with the 160 MHz bandwidth, the data sent by the AP, and the TxBF function is in a disabled state during data receiving, that is, the STA does not use the TxBF function to receive the data. Compared with the foregoing FIG. 2B, when the AP is a faulty AP that causes a low network speed problem when the AP uses the 160 MHz bandwidth and the TxBF technology, use of the communication control method provided in embodiments of this application enables the AP and the STA to negotiate the maximum bandwidth of 160 MHz in the connection establishment process, but TxBF is not supported. Because TxBF is not supported during data transmission, the problem scenario in FIG. 2B does not occur.

It should be noted that both the STA and the AP support TxBF and the 160 MHz bandwidth. If the communication control method provided in embodiments of this application is not used, the STA and the AP usually negotiate the maximum bandwidth of 160 MHz supported and support for TxBF during data transmission. However, in practice, it is found that if the faulty AP negotiates, during connection establishment, the maximum bandwidth of 160 MHz supported and support for TxBF during data transmission, the problem scenario shown in FIG. 2B occurs during data transmission, and TxBF cannot be used normally for data transmission. Therefore, to avoid entering the problem scenario in FIG. 2B, in (2a) in FIG. 4, the STA that originally supports TxBF falsely reports to the AP that the STA, as a receive end, does not support TxBF.

It should be further noted that the manner in which the STA determines, based on the information about the STA in the probe response frame, whether the AP is the faulty AP includes: an organization unique identifier (organization unique identifier, OUI) in the probe response frame indicates that the AP is produced by the manufacturer A. The STA has recorded an OUI (preset OUI) of a manufacturer producing a faulty AP. When the OUI in the probe response frame is the same as the preset OUI and the AP supports 160 MHz, the AP is determined to be the faulty AP. Alternatively, the manner includes: the probe response frame carries, in addition to an OUI of the AP and information about whether the AP supports 160 MHz, information indicating whether the AP supports TxBF. When the OUI in the probe response frame is the same as the preset OUI, and the AP supports 160 MHz, and the AP supports TxBF, the AP is determined to be the faulty AP.

It should be further noted that if the probe response frame carries information indicating that the AP does not support TxBF, it is unnecessary to perform a false reporting operation. Normal negotiation of a bandwidth and a TxBF capability is sufficient, because with reference to the content shown in FIG. 2A and FIG. 2B, when the AP does not support TxBF, the foregoing low network speed problem does not occur.

It should be further noted that even if the probe response frame does not carry information indicating whether the AP supports 160 MHz, the communication control method provided in embodiments of this application may also be used, because even if the AP is an AP that does not support the TxBF technology, implementing the communication control method provided in embodiments of this application does not bring negative benefits.

If the AP is determined to be a normal AP based on the probe response frame, for a case in which the AP and the STA negotiate the bandwidth and use TxBF, refer to (1), (2b), and (3b) in FIG. 4(b). For the faulty AP and the STA that are configured with TxBF and support the maximum bandwidth of 160 MHz, after they are connected, the AP may use the channel with the 160 MHz bandwidth to send data to the STA, and the TxBF function is enabled during data sending. The STA may receive, on the channel with the 160 MHz bandwidth, the data sent by the AP, and the TxBF function is in an enabled state during data receiving, that is, the STA uses the TxBF function to receive the data.

Content in (2b) and (3b) shown in FIG. 4(b) is similar to content in (2a) and (3a) shown in FIG. 4(a). For details, refer to the related content. Details are not described herein again.

Manner 2: In a connection establishment process, if the STA recognizes that the AP selected for connection establishment may be the faulty AP and that the AP supports a 160 MHz bandwidth, the 160 MHz bandwidth on the STA side is disabled.

It should be noted that in the manner 2, if the 160 MHz bandwidth is disabled, TxBF is not used within the 160 MHz bandwidth, and therefore, the foregoing problem scenario shown in FIG. 2B does not occur.

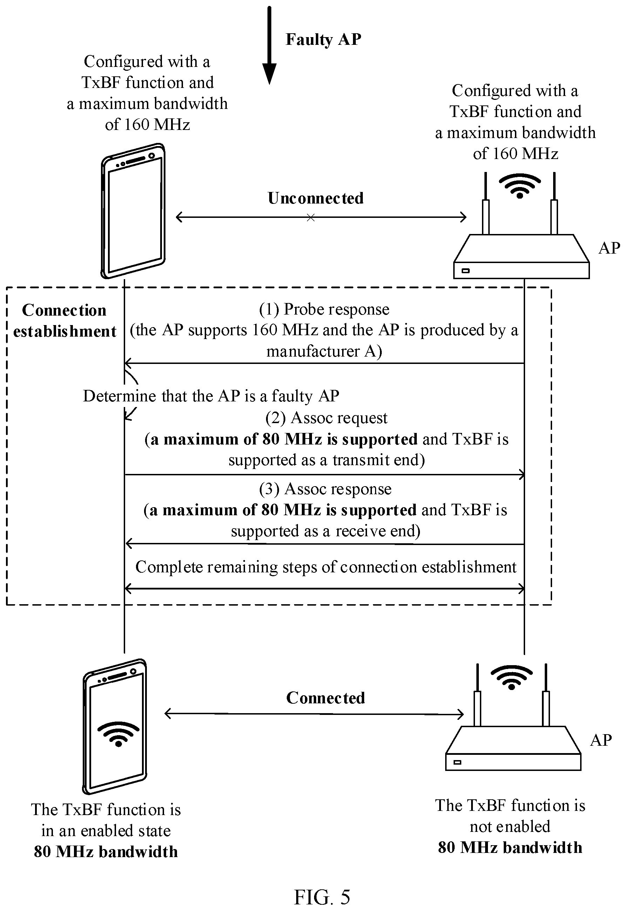

As shown in FIG. 5, for the faulty AP and the STA configured with the TxBF function and supporting a maximum bandwidth of 160 MHz, the manner 2 may be implemented during connection establishment. An implementation process of the manner 2 includes the following content.

As shown in (1), the AP notifies the STA by using a probe response frame that the AP supports 160 MHz and that the AP is produced by a manufacturer A. Herein, the STA may determine, based on information about the STA in the probe response frame, whether the AP is the faulty AP. For the process of determining whether the AP is the faulty AP herein, refer to the foregoing content about determining whether the AP is the faulty AP in the manner 1. Details are not described herein again.

When the AP is the faulty AP, as shown in (2), the STA selects to connect to the AP based on the probe response frame and sends an Assoc request frame to the AP. The Assoc request frame is used to notify the AP that the STA supports a maximum of 80 MHz and supports TxBF as a receive end. As shown in (3), in response to the Assoc request frame, the AP sends an Assoc response frame to the STA. Herein, the Assoc response frame is used to notify the STA that the AP supports a maximum of 80 MHz and supports TxBF as a transmit end.

Herein, after the STA notifies the AP in (2) in FIG. 5 that the STA supports a maximum bandwidth of 80 MHz, the AP originally supporting a maximum bandwidth of 160 MHz is also caused to notify the STA that the AP supports a maximum bandwidth of 80 MHz. This is because, during data transmission, the maximum bandwidths supported by the STA and the AP should be the same. If the maximum bandwidths supported by the STA and the AP are different, at least a problem of a data loss or a bandwidth resource waste is caused: When the AP as the transmit end uses the bandwidth A to send data to the receive end STA, if a bandwidth used by the STA as the receive end is less than a bandwidth A, the STA is unable to receive the data in time, resulting in a data loss. If the used bandwidth is greater than the bandwidth A, a bandwidth resource waste is caused.

Subsequently, the STA and the AP complete remaining steps of connection establishment to establish a connection. After the connection is established, the AP may use a channel with the 80 MHz bandwidth to send data to the STA. The TxBF function is enabled during data sending. The STA may receive, on the channel with the 80 MHz bandwidth, the data sent by the AP, and the TxBF function is in an enabled state during data receiving, that is, the STA uses the TxBF function to receive the data. Compared with the foregoing FIG. 2B, when the AP is a faulty AP that causes a low network speed problem when the AP uses the 160 MHz bandwidth and the TxBF technology, use of the communication control method provided in embodiments of this application enables the AP and the STA to negotiate the maximum bandwidth of 80 MHz in the connection establishment process, and TxBF is supported. Because the 160 MHz bandwidth is not used during data transmission, the problem scenario in FIG. 2B does not occur.

It should be noted that both the STA and the AP support TxBF and the 160 MHz bandwidth. If the communication control method provided in embodiments of this application is not used, the STA and the AP usually negotiate the maximum bandwidth of 160 MHz supported and support for TxBF during data transmission. However, in practice, it is found that if the faulty AP negotiates, during connection establishment, the maximum bandwidth of 160 MHz supported and support for TxBF during data transmission, the problem scenario shown in FIG. 2B occurs during data transmission, and TxBF cannot be used normally for data transmission. Therefore, to avoid entering the problem scenario in FIG. 2B, in (2) in FIG. 5, the STA that originally supports the 160 MHz bandwidth falsely reports to the AP that the STA supports a maximum of 80 MHz.

It should be further noted that, for the related content involved in the manner 2 when the AP is a normal AP, refer to the foregoing description of (b) in FIG. 4. Details are not described herein again.

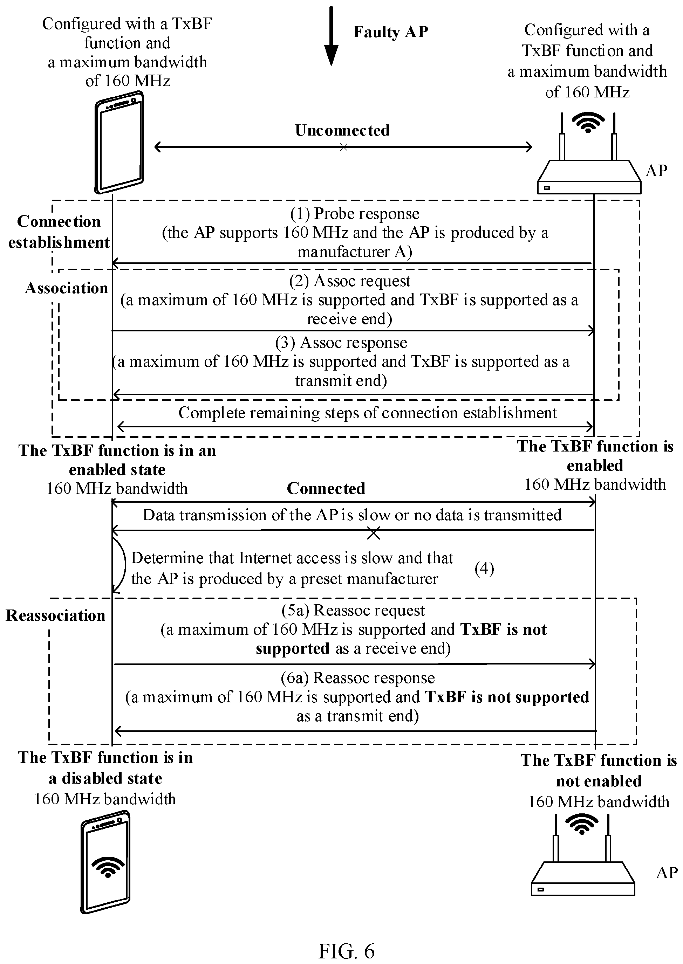

Manner 3: In a connection establishment process, a 160 MHz bandwidth is negotiated and the TxBF technology is enabled. After the STA establishes a connection to the AP and recognizes slow Internet access, the STA determines whether the connected AP is produced by a manufacturer of a faulty AP. If yes, the TxBF function on the STA side is disabled. A slow Internet access scenario includes: data transmission of the AP is slow or no data is transmitted. As shown in FIG. 6, for the faulty AP and the STA that are configured with the TxBF function and support a maximum bandwidth of 160 MHz, in the connection establishment process, for example, in a process shown in (1), (2), and (3), use of the 160 MHz bandwidth and the TxBF function is negotiated based on a probe response frame in a scanning phase, and an Assoc request frame and an Assoc response frame involved in an association process. After the connection is established, the manner 3 may be implemented to perform reassociation. An implementation process of the manner 3 includes the following content. For details about the negotiation process, refer to the foregoing description of the content shown in FIG. 3A. Details are not described herein again.

When the STA and the AP are connected, refer to (4). When the AP side uses the TxBF technology to transmit data on a channel with the 160 MHz bandwidth, if the negotiated bandwidth changes as shown in FIG. 2B, data transmission of the AP is slow or no data is transmitted. In this case, the STA determines that Internet access is slow and that the AP is produced by a preset manufacturer, that is, the manufacturer A is the preset manufacturer. Then reassociation is performed to disable the TxBF function. As shown in (5a), the STA sends a Reassoc request frame to the connected AP. The Reassoc request frame is used to notify the AP that the STA supports a maximum of 160 MHz and does not support TxBF as a receive end. As shown in (6a), in response to the Reassoc request frame, the AP sends a Reassoc response frame to the STA. Herein, the Reassoc response frame is used to notify the STA that the AP supports a maximum of 160 MHz and does not support TxBF as a transmit end. Subsequently, the STA establishes a new connection to the AP. After the connection is established, the AP may use the channel with the 160 MHz bandwidth to send data to the STA. The TxBF function is not enabled during data sending. The STA may receive, on the channel with the 160 MHz bandwidth, the data sent by the AP, and the TxBF function is in a disabled state during data receiving, that is, the STA does not use the TxBF function to receive the data.

It should be noted that, for a cause of the slow Internet access in the manner 3, refer to FIG. 2B. Compared with the foregoing manners 1 and 2, the manner 3 is equivalent to reconnection when Internet access is slow. In a reconnection process, the AP and the STA renegotiate a maximum bandwidth and a TxBF capability for data transmission. A negotiation result is that TxBF is no longer used, but both parties still support the 160 MHz bandwidth. The negotiation result in the manner 3 can prevent the AP from continuing to use TxBF to send data to the STA on the channel with the 160 MHz bandwidth, thereby avoiding continuous slow Internet access. Herein, for a reason for negotiating support for a maximum of 160 MHz but no support for TxBF during reconnection, refer to the foregoing description of the bandwidth and TxBF negotiation in the connection establishment process in the manner 1. Details are not described herein again.

Manner 4: In a connection establishment process, a 160 MHz bandwidth is negotiated and the TxBF technology is enabled. After the STA establishes a connection to the AP and recognizes slow Internet access, the STA determines whether the connected AP is produced by a manufacturer of a faulty AP. If yes, the 160 MHz bandwidth on the STA side is disabled.

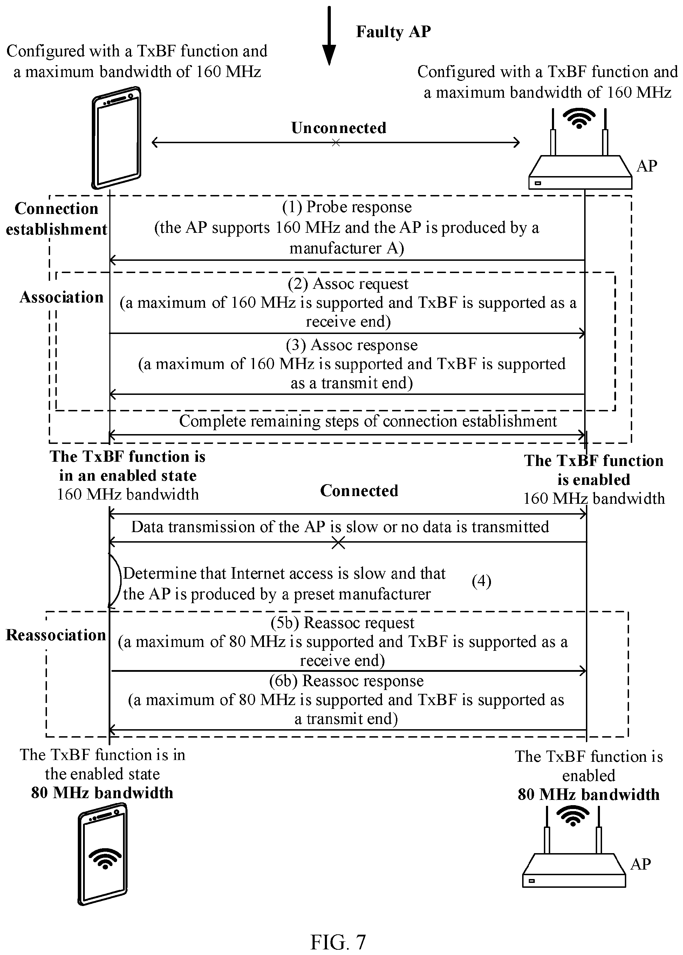

As shown in FIG. 7, for the faulty AP and the STA that are configured with the TxBF function and support a maximum bandwidth of 160 MHz, in the connection establishment process, for example, in a process shown in (1), (2), and (3), use of the 160 MHz bandwidth and the TxBF function is negotiated based on a probe response frame in a scanning phase, and an Assoc request frame and an Assoc response frame involved in an association process. After the connection is established, the manner 4 may be implemented to perform reassociation. An implementation process of the manner 4 includes the following content. For details about the negotiation process, refer to the foregoing description of the content shown in FIG. 3A. Details are not described herein again.

When the STA and the AP are connected, refer to (4). When the AP side uses the TxBF technology to transmit data on a channel with the 160 MHz bandwidth, if the negotiated bandwidth changes as shown in FIG. 2B, data transmission of the AP is slow or no data is transmitted. In this case, the STA determines that Internet access is slow and that the AP is produced by a preset manufacturer, that is, the manufacturer A is the preset manufacturer. Then reassociation is performed to disable the 160 MHz bandwidth. As shown in (5b), the STA sends a Reassoc request frame to the connected AP. The Reassoc request frame is used to notify the AP that the STA supports a maximum of 80 MHz and supports TxBF as a transmit end. As shown in (6b), in response to the Reassoc request frame, the AP sends a Reassoc response frame to the STA. Herein, the Reassoc response frame is used to notify the STA that the AP supports a maximum of 80 MHz and supports TxBF as a transmit end.

Subsequently, the STA establishes a new connection to the AP. After the connection is established, the AP may use a channel with the 80 MHz bandwidth to send data to the STA. The TxBF function is enabled during data sending. The STA may receive, on the channel with the 80 MHz bandwidth, the data sent by the AP, and the TxBF function is in an enabled state during data receiving, that is, the STA uses the TxBF function to receive the data.

It should be noted herein that the process of determining the manufacturer A in the manners 2 to 4 is the same as that in the manner 1. Details are not described herein again.

It should be noted that, for a cause of the slow Internet access in the manner 4, refer to FIG. 2B. Compared with the foregoing manners 1 and 2, the manner 4 is equivalent to reconnection when Internet access is slow. In a reconnection process, the AP and the STA renegotiate a maximum bandwidth and a TxBF capability for data transmission. A negotiation result is that a maximum bandwidth of 80 MHz is supported, but both parties still support TxBF. The negotiation result in the manner 4 can prevent the AP from continuing to use TxBF to send data to the STA on the channel with the 160 MHz bandwidth, thereby avoiding continuous slow Internet access. Herein, for a reason for negotiating support for a maximum of 80 MHz and support for TxBF during reconnection, refer to the foregoing description of the bandwidth and TxBF negotiation in the connection establishment process in the manner 2. Details are not described herein again.

In the manner 3 and the manner 4, the slow Internet access refers to a low network speed of the STA, and the slow Internet access means that communication quality between the STA and the AP is lower than a preset level. A condition for performing reassociation to disable the TxBF function in the manner 3 and performing reassociation to disable the 160 MHz bandwidth in the manner 4 may be referred to as a first condition. The first condition includes that Internet access is slow, or may further include that Internet access is slow and that the AP is produced by the preset manufacturer. Herein, the reassociation includes: the STA sends a reassociation request frame to the AP, and the AP sends a reassociation response frame to the STA.

It should be further noted that in the manner 2 and the manner 4, disabling the 160 MHz bandwidth means enabling other bandwidths than 160 MHz. Herein, the 80 MHz bandwidth is used as an example for description, and the bandwidth may be adjusted based on an actual situation. For example, the bandwidth may alternatively be a 40 MHz bandwidth or a 20 MHz bandwidth. This is not limited in embodiments of this application.

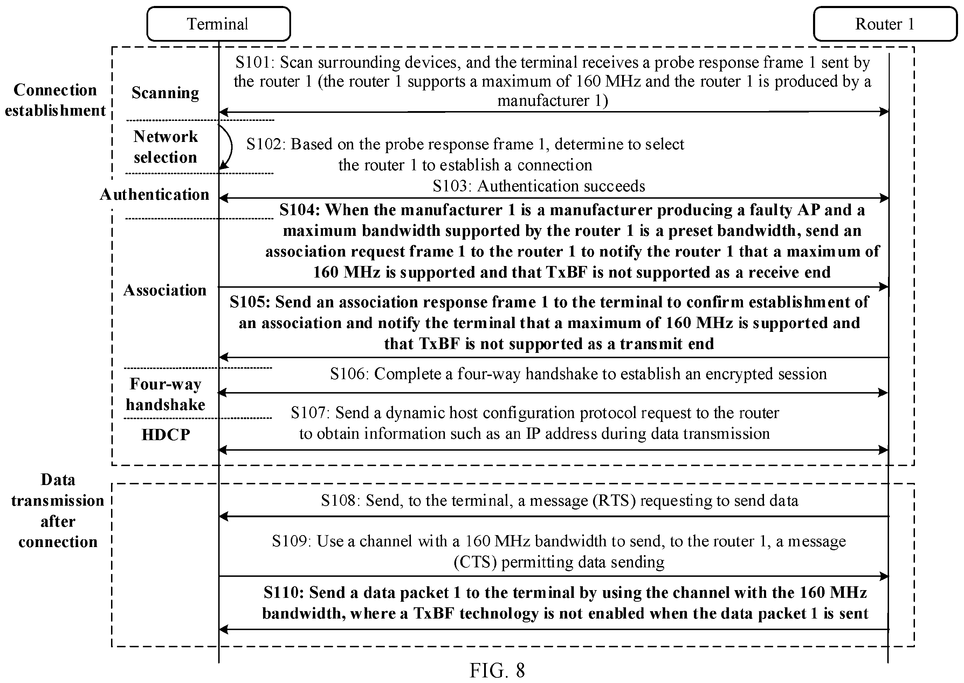

The following further describes the manner 1 with reference to FIG. 8.

In the manner 1, the STA sends a probe request frame, and the AP replies with a probe response frame. By using this packet message (Probe response frame), router information (organization unique identifier, OUI) and a negotiated bandwidth are obtained. After the STA learns that an OUI corresponding to the currently selected AP is an OUI of a manufacturer of a faulty AP and that the bandwidth is 160 MHz, the STA disables the TxBF function. After a connection is successfully established subsequently, the TxBF function of the AP is also disabled. For a description of this process, refer to step S101 to step S110 shown in FIG. 8 described below.

FIG. 8 illustrates an example in which the STA is a terminal and the AP is a router.

S101: Scan surrounding devices. The terminal receives a probe response frame 1 sent by a router 1 (the router 1 supports a maximum of 160 MHz and the router 1 is produced by a manufacturer 1).

Step S101 corresponds to the scanning phase shown in FIG. 3A. When the terminal scans the surrounding devices by sending probe request frames to the surrounding devices, the terminal receives probe response (Probe response) frames sent by the surrounding devices. The surrounding devices of the terminal include the router 1, and the router 1 also sends the probe response frame 1 to the terminal. The probe response frame 1 is used to notify the terminal that the router 1 supports a maximum of 160 MHz and that the router 1 is produced by the manufacturer 1.

S102: Based on the probe response frame 1, determine to select the router 1 to establish a connection.

Step S102 corresponds to the network selection phase shown in FIG. 3A. The terminal compares factors such as signal strength and quality carried in the received probe response frames (including the probe response frame 1) and selects a best router (router 1) to establish a connection.

S103: Authentication succeeds.

Step S103 corresponds to the authentication phase shown in FIG. 3A. For related content involved in the authentication process, refer to the foregoing description of the related content shown in FIG. 3A. Details are not described herein again. After the authentication succeeds, the association phase in the following step S104 is entered.

**S104: When the manufacturer 1 is a manufacturer producing a faulty AP and a maximum bandwidth supported by the router 1 is a preset bandwidth, send an association request frame 1 to the router 1 to notify the router 1 that a maximum of 160 MHz is supported and that TxBF is not supported as a receive end.**

That TxBF is not supported as a transmit end means that the terminal does not support the TxBF technology and cannot correctly receive and process a signal sent by using the TxBF technology.

Step S104 corresponds to the foregoing content involved in sending an Assoc request frame in FIG. 3A.

Step S104 is performed herein to disable the TxBF function on the terminal side. However, a function of using the 160 MHz bandwidth by the terminal is not disabled.

Subsequently, after receiving the association request frame 1, the router 1 may determine, based on the association request frame 1, that the terminal as a transmit end does not support TxBF, and the router 1 also negotiates disabling of the TxBF function and enabling of 160 MHz. Subsequently, the TxBF function on the router 1 side is also disabled when data is sent to the terminal. For details, refer to the following description of step S105.

After step S104 is performed, TxBF of the terminal is in the disabled state. A scenario in which TxBF of the terminal is in the disabled state includes but is not limited to the following: If TxBF of the terminal is in the disabled state before step S104 is performed, TxBF remains in the disabled state. Alternatively, if TxBF of the terminal is in the enabled state before step S104 is performed, the terminal may first disable TxBF and then perform step S104.

**S105: Send an association response frame 1 to the terminal to confirm establishment of an association and notify the terminal that a maximum of 160 MHz is supported and that TxBF is not supported as a transmit end.**

Step S105 corresponds to the foregoing content involved in sending an Assoc response frame in FIG. 3A.

In this way, in the association process, it is negotiated that neither party supports TxBF and that both parties support the 160 MHz bandwidth. This means that based on the connection established in this association phase, the router 1 sends data to the AP on a channel with the 160 MHz bandwidth and does not use TxBF when sending the data.

S106: Complete a four-way handshake to establish an encrypted session.

Step S106 corresponds to the four-way handshake phase in FIG. 3A. Refer to the description of the foregoing related content. Details are not described herein again.

S107: Send a dynamic host configuration protocol request to the router to obtain information such as an IP address during data transmission.

Step S107 corresponds to the DHCP phase in FIG. 3A. Refer to the description of the foregoing related content. Details are not described herein again.

Based on the foregoing step S101 to step S107, a connection A1 is established between the terminal and the router 1. The terminal and the router 1 can communicate through the connection A1. For content involved when the router 1 sends data (for example, a data packet) to the terminal through the connection A1, refer to the following step S108 to step S110.

S108: The router 1 sends, to the terminal, a message requesting to send data.

The message requesting to send data may be the foregoing dynamic RTS.

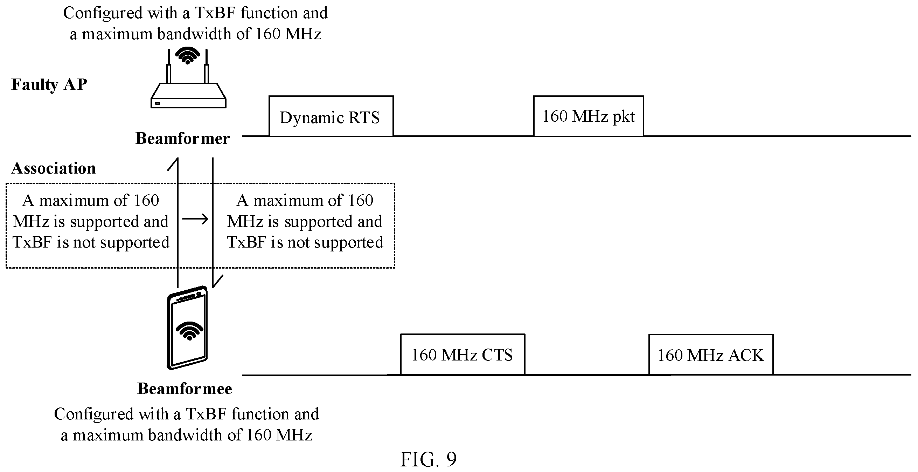

As shown in FIG. 9, although the terminal and the router 1 (a faulty AP) are both configured with the TxBF function and support a maximum bandwidth of 160 MHz, to prevent the problem scenario shown in FIG. 2B, in the association process, the terminal and the router 1 negotiate support for the maximum bandwidth of 160 MHz but no support for TxBF. After the connection is established, the router 1, as a beamformer (beamformer), sends a dynamic (Dynamic) RTS (Request To Send) to the terminal as a beamformee (beamforming receive end), to request to send data on the channel with the 160 MHz bandwidth.

S109: The terminal uses the channel with the 160 MHz bandwidth to send, to the router 1, a message permitting data sending.

The message permitting data sending may be the foregoing CTS.

With continued reference to FIG. 9, the terminal detects that the channel with the 160 MHz bandwidth is available, and then replies to the router 1 with a 160 MHz CTS (Clear To Send) to notify the router 1 to send data on the channel with the 160 MHz bandwidth.

**S110: The router 1 sends a data packet 1 to the terminal by using the channel with the 160 MHz bandwidth, where the TxBF technology is not enabled when the data packet 1 is sent.**

With continued reference to FIG. 9, the router 1 sends data (a packet) to the terminal on the channel with the 160 MHz bandwidth. After receiving the packet, the terminal sends an acknowledgment (ACK) packet to the router 1 on the channel with the 160 MHz bandwidth. Up to now, the router 1 and the terminal have completed data transmission once.

It should be noted that, in FIG. 9, because the terminal and the router negotiate support for the maximum bandwidth of 16 MHz and no support for TxBF during association, when the router 1 sends data (a packet) to the terminal, the router 1 uses the 160 MHz bandwidth but does not use TxBF. TxBF of the terminal is in the disabled state when the data (the packet) is received.

It should be noted herein that the data transmission shown in step S108 to step S110 is merely an example for description. In an actual situation, the bandwidth negotiated in the association phase is only the maximum bandwidth. If the channel with the 160 MHz bandwidth is unavailable, the terminal may also change the bandwidth by using the CTS. For related content, refer to the foregoing description. Details are not described herein again.

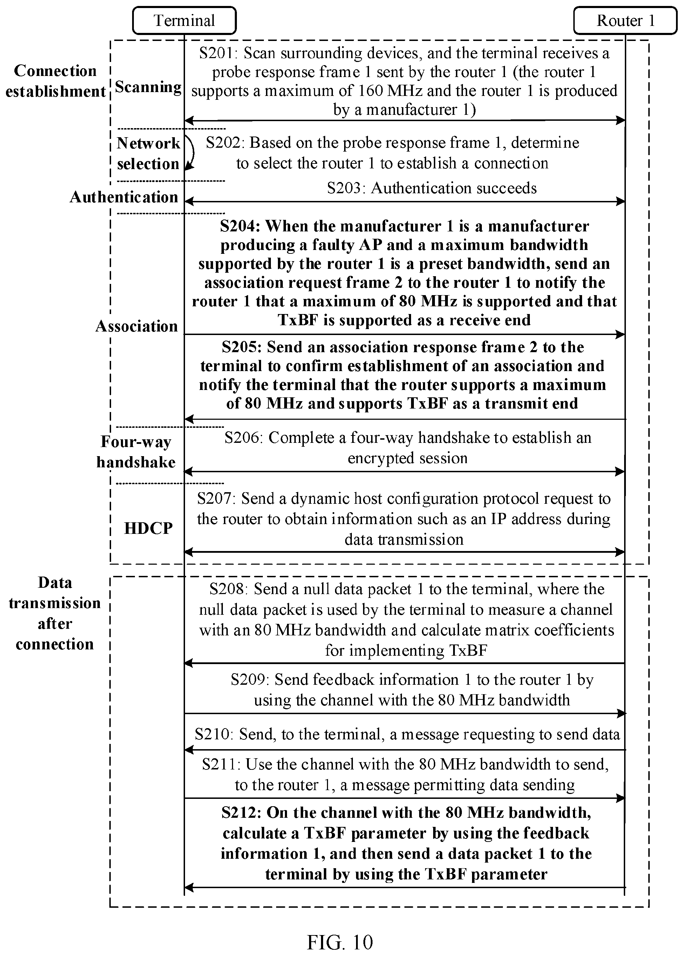

The following further describes the manner 2 with reference to FIG. 10.

In the manner 2, the STA sends a probe request frame, and the AP replies with a probe response frame. By using this packet message (Probe response frame), router information OUI and a negotiated bandwidth are obtained. After the STA learns that an OUI corresponding to the currently selected AP is an OUI of a manufacturer of a faulty AP and that the bandwidth is 160 MHz, the STA disables the 160 MHz bandwidth. After a connection is successfully established subsequently, the TxBF function of the AP is enabled. For a description of this process, refer to step S201 to step S212 shown in FIG. 10 described below.

FIG. 10 illustrates an example in which the STA is a terminal and the AP is a router.

S201: Scan surrounding devices. The terminal receives a probe response frame 1 sent by a router 1.

S202: Based on the probe response frame 1, determine to select the router 1 to establish a connection, where the probe response frame 1 includes that a maximum bandwidth supported by the router 1 is 160 MHz and that the router 1 is produced by a manufacturer 1.

S203: Authentication succeeds.

Content involved in step S201 to step S203 is the same as that in the foregoing step S101 to step S103. Refer to the description of the foregoing related content. Details are not described herein again.

**S204: When the manufacturer 1 is a manufacturer producing a faulty AP and the maximum bandwidth supported by the router 1 is a preset bandwidth, send an association request frame 2 to the router 1 to notify the router 1 that a maximum of 80 MHz is supported and that TxBF is supported as a receive end.**

Supporting 80 MHz means that the terminal does not support the 160 MHz bandwidth.

Step S204 corresponds to the foregoing content involved in sending an Assoc request frame in FIG. 3A.

Step S204 is performed herein to disable the 160 MHz bandwidth on the terminal side. However, the TxBF function of the terminal is not disabled, and TxBF is in the enabled state.

After step S204 is performed, TxBF of the terminal is in the enabled state. A scenario in which TxBF of the terminal is in the enabled state includes but is not limited to the following: If TxBF of the terminal is in the enabled state before step S204 is performed, TxBF remains in the enabled state. Alternatively, if TxBF of the terminal is in the disabled state before step S204 is performed, the terminal may first enable TxBF and then perform step S204.

Subsequently, after receiving the association request frame 2, the router 1 may determine, based on the association request frame 2, that the terminal as a transmit end supports TxBF and 80 MHz, and the router 1 also negotiates enabling of the TxBF function and enabling of 80 MHz. Subsequently, the TxBF function on the router 1 side is also enabled when data is sent to the terminal. For details, refer to the following description of step S205.

**S205: Send an association response frame 2 to the terminal to confirm establishment of an association and notify the terminal that the router supports a maximum of 80 MHz and supports TxBF as a transmit end.**

Step S205 corresponds to the foregoing content involved in sending an Assoc response frame in FIG. 3A.

In this way, in the association process, it is negotiated that both parties support TxBF and support the 80 MHz bandwidth. This means that based on the connection established in this association phase, the router 1 sends data to the AP on a channel with the 80 MHz bandwidth and uses TxBF when sending the data.

S206: Complete a four-way handshake to establish an encrypted session.

Step S206 corresponds to the four-way handshake phase in FIG. 3A. Refer to the description of the foregoing related content. Details are not described herein again.

S207: Send a dynamic host configuration protocol request to the router to obtain information such as an IP address during data transmission.

Step S207 corresponds to the DHCP phase in FIG. 3A. Refer to the description of the foregoing related content. Details are not described herein again.

Based on the foregoing step S201 to step S207, a connection A2 is established between the terminal and the router 1. The terminal and the router 1 can communicate through the connection A2. For content involved when the router 1 sends data (for example, a data packet) to the terminal through the connection A2, refer to the following step S208 to step S212.

S208: The router 1 sends a null data packet 1 to the terminal, where the null data packet is used by the terminal to measure the channel with the 80 MHz bandwidth and calculate matrix coefficients for implementing TxBF.

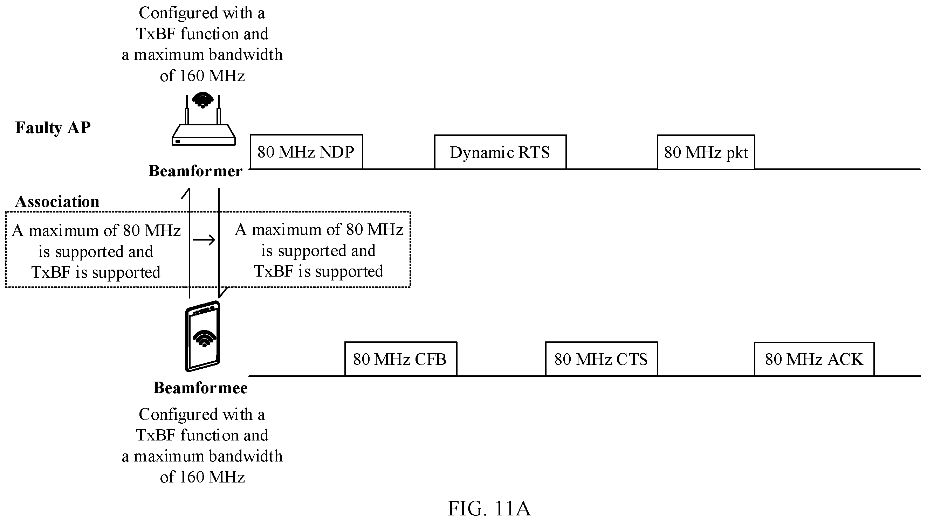

With reference to FIG. 11A, although the terminal and the router 1 (a faulty AP) are both configured with the TxBF function and support the maximum bandwidth of 160 MHz, to prevent the problem scenario shown in FIG. 2B, in the association process, the terminal and the router 1 negotiate support for a maximum bandwidth of 8 MHz and support for TxBF. After the connection is established, the router 1, as a beamformer (beamformer), may send the null data packet 1 to the terminal as a beamformee (beamforming receive end) on the channel with the 80 MHz bandwidth, where the null data packet 1 may be an 80 MHz NDP. For content about the 80 MHz NDP, refer to the description of the 80 MHz NDP in FIG. 2A. Details are not described herein again.

S209: The terminal sends feedback information 1 to the router 1 by using the channel with the 80 MHz bandwidth.

With continued reference to FIG. 11A, the feedback information 1 is an 80 MHz CFB. The terminal may return information (for example, an SNR) and steering matrix coefficients of the channel with the 80 MHz bandwidth to the router 1 by using the feedback information 1. For the 80 MHz CFB, refer to the foregoing description of the 160 CFB. It is only necessary to change 160 MHz to 80 MHz. Details are not described herein again.

S210: The router 1 sends, to the terminal, a message requesting to send data.

With reference to FIG. 11A, the message requesting to send data may be the foregoing dynamic RTS.

S211: The terminal uses the channel with the 80 MHz bandwidth to send, to the router 1, a message permitting data sending.

With continued reference to FIG. 11A, when the terminal performs channel detection and determines that the channel with the 80 MHz bandwidth is available, the terminal may notify the router 1 by using an 80 MHz CTS that data can be sent on the channel with the 80 MHz bandwidth.

**S212: On the channel with the 80 MHz bandwidth, the router 1 calculates a TxBF parameter by using the feedback information 1, and then sends a data packet 1 to the terminal by using the TxBF parameter.**

Subsequently, the terminal may receive the data packet 1 on the channel with the 80 MHz bandwidth. When the data packet 1 is received, the TxBF function of the terminal is in the enabled state.

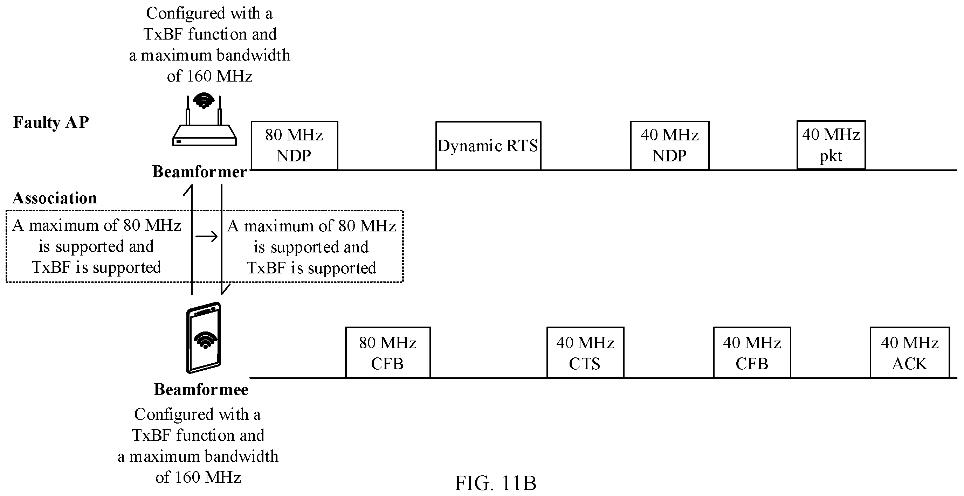

It should be understood herein that the foregoing step S208 to step S212 illustrate a situation in which the 80 MHz bandwidth is available. In an actual situation, in step S211, a result of the channel detection performed by the terminal may be that the channel with the 80 MHz bandwidth is unavailable, and then the terminal switches to another available channel by using a CTS, for example, the available channel is a channel with a 40 MHz bandwidth. For this process, refer to the content in FIG. 11B. The content shown in FIG. 11B is similar to that shown in FIG. 2A, except that 160 MHz is changed to 80 MHz and that 80 MHz is changed to 40 MHz. Details are not described herein again.

Based on FIG. 11A and FIG. 11B, it can be learned that when TxBF is used for data transmission on a channel with a non-preset bandwidth (for example, 80 MHz) without using the preset bandwidth (160 MHz), regardless of whether the bandwidth used is the negotiated maximum bandwidth or is less than the maximum bandwidth, the problem scenario shown in FIG. 2B does not occur when TxBF is used for data transmission.

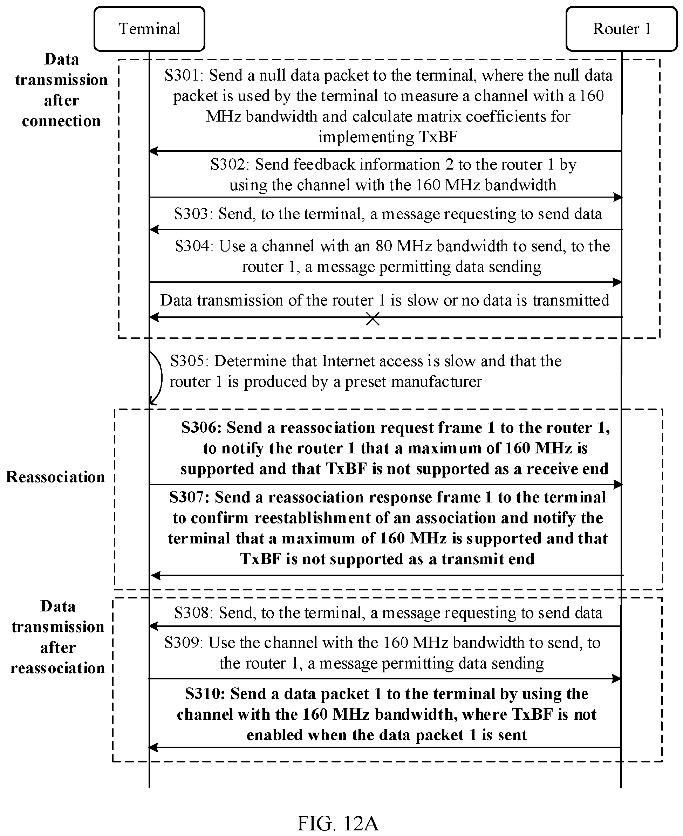

The following further describes the manner 3 with reference to FIG. 12A.

In the manner 3, after a connection is established, whether an application experiences slow Internet access is identified. A main manner is as follows: A kernel parses a packet, and then evaluates, based on a packet delay, a packet loss, quality of experience (Quality of Experience, QoE) of a user, or the like, whether slow Internet access occurs. If slow Internet access is recognized and the connected AP is produced by a manufacturer of a faulty AP, the TxBF function on the STA side is disabled. For content involved in the process, refer to the following description of step S301 to step S310.

FIG. 12A illustrates an example in which the STA is a terminal and the AP is a router.

S301: A router 1 sends a null data packet to the terminal, where the null data packet is used by the terminal to measure a channel with a 160 MHz bandwidth and calculate matrix coefficients for implementing TxBF.

After a connection A3 is established, the terminal and the router 1 can communicate through the connection A3.

It should be noted herein that, in the process of establishing the connection A3, a bandwidth negotiated by the terminal and the router is 160 MHz, and when the terminal serves as a transmit end, and the router 1 serves as a receive end, both parties support TxBF. For content involved in establishing the connection A3, refer to the foregoing description of FIG. 3A. Details are not described herein again.

S302: The terminal sends feedback information 2 to the router 1 by using the channel with the 160 MHz bandwidth.

The feedback information 2 is the foregoing 160 MHz CFB. The terminal may return information (for example, an SNR) and steering matrix coefficients of the channel with the 160 MHz bandwidth to the router 1 by using the feedback information 2.

S303: The router 1 sends, to the terminal, a message requesting to send data.

The message requesting to send data may be the foregoing dynamic RTS.

S304: The terminal uses a channel with an 80 MHz bandwidth to send, to the router 1, a message permitting data sending.

The message permitting data sending may be the foregoing 80 MHz CTS.

When the terminal performs channel detection and determines that the channel with the 160 MHz bandwidth is unavailable, the terminal may notify the router 1 by using the CTS that data can be sent on the channel with the 80 MHz bandwidth.

However, with reference to the foregoing content shown in FIG. 2B, because the negotiated bandwidth is changed, the router cannot correctly process the 80 MHz CTS sent in step S304, and data transmission of the router 1 is slow or no data is transmitted.

S305: The terminal determines that Internet access is slow and that the router 1 is produced by a preset manufacturer.

It should be noted herein that the operation of determining that the router 1 is produced by the preset manufacturer in step S305 is optional. Step S305 may be changed as follows: The terminal determines that Internet access is slow. Because there are many manufacturers of faulty APs, it is impossible to list all the manufacturers. However, when the terminal and the router 1 use the TxBF technology and the 160 MHz bandwidth, and a low network speed problem occurs, it sufficiently indicates that the router 1 is a faulty AP.

The terminal receives a probe response frame 1 sent by the router 1 and may record an OUI in the probe response frame 1. When it is determined that the OUI of the router 1 is a preset OUI, it is determined that the router 1 is produced by the preset manufacturer. Manners in which the terminal determines that the Internet access is slow in step S305 include but are not limited to the following determining manners.

Determining manner 1: When the terminal determines that there is only uplink data but no downlink data within a preset time, the terminal may determine that the Internet access is slow.

Determining manner 2: A kernel parses a packet. If a packet delay is greater than a preset delay and a packet loss rate is greater than a preset packet loss rate, the terminal may determine that the Internet access is slow.

Determining manner 3: When the terminal does not receive the data requested to be sent by the router in step S303 within a preset time, the terminal may determine that the Internet access is slow.

Determining manner 4: When quality of experience (QoE) of the user is lower than a preset value, the terminal may determine that the Internet access is slow.

Subsequently, the terminal performs a reassociation process involved in the following step S306 and step S307 to disable the TxBF function to resolve the slow Internet access problem.

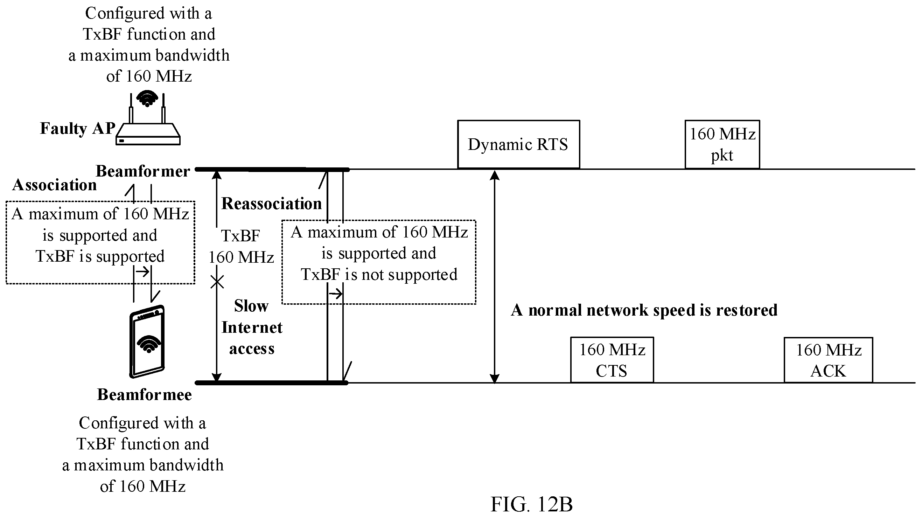

As shown in FIG. 12B, the terminal and the router 1 (a faulty AP) configured with the TxBF function and supporting a maximum bandwidth of 160 MHz negotiate in an association process that both parties support the maximum bandwidth of 160 MHz and support TxBF. After the connection is established, the problem scenario shown in FIG. 2B occurs during data transmission, resulting in a low network speed. In this case, the following step S306 and step S307 may be performed to perform reassociation and renegotiate a maximum bandwidth and a TxBF capability. Herein, a negotiation result is that the maximum bandwidth supported is 160 MHz and that TxBF is not supported.

**S306: The terminal sends a reassociation request frame 1 to the router 1, to notify the router 1 that a maximum of 160 MHz is supported and that TxBF is not supported as a receive end.**

**S307: The router 1 sends a reassociation response frame 1 to the terminal to confirm reestablishment of an association and notify the terminal that a maximum of 160 MHz is supported and that TxBF is not supported as a transmit end.**

With continued reference to FIG. 12B, the negotiation result in step S306 and step S307 is that both parties support a maximum bandwidth of 160 MHz but neither supports TxBF. In this way, during subsequent data transmission, the router 1 no longer uses TxBF to send data to the terminal, and a normal network speed can be restored. For the process of data transmission after reassociation, refer to the following description of step S308 to step S310

For related content involved in step S306 and step S307, refer to the description of the reassociation in FIG. 6. Details are not described herein again.

It should be noted that reassociation is different from reconnection after disconnection. The user is not aware of the reassociation process, and a Wi-Fi indicator displayed on the terminal may be displayed throughout. After reassociation, the terminal and the router 1 may perform the following step S308 to step S310 to implement data transmission.

S308: The router 1 sends, to the terminal, a message requesting to send data.

The message requesting to send data in step S308 may be regarded as a dynamic RTS in FIG. 12B.

As shown in FIG. 12B, after reassociation, the router 1, as a beamformer (beamformer), sends a dynamic (Dynamic) RTS (Request To Send) to the terminal as a beamformee (beamforming receive end), to request to send data on the channel with the 160 MHz bandwidth.

S309: The terminal uses the channel with the 160 MHz bandwidth to send, to the router 1, a message permitting data sending.

The message permitting data sending in step S309 may be a 160 CTS in FIG. 12B.

With continued reference to FIG. 12B, the terminal detects that the channel with the 160 MHz bandwidth is available, and then replies to the router 1 with a 160 MHz CTS (Clear To Send) to notify the router 1 to send data on the channel with the 160 MHz bandwidth.

**S310: The router 1 sends a data packet 1 to the terminal by using the channel with the 160 MHz bandwidth, where TxBF is not enabled when the data packet 1 is sent.**

With continued reference to FIG. 12B, the router 1 sends data (a packet) to the terminal on the channel with the 160 MHz bandwidth. After receiving the packet, the terminal sends an acknowledgment (ACK) packet to the router 1 on the channel with the 160 MHz bandwidth. Up to now, the router 1 and the terminal have completed data transmission once.

It should be noted that, in FIG. 12B, because the terminal and the router negotiate support for the maximum bandwidth of 16 MHz and no support for TxBF during association, when the router 1 sends data (a packet) to the terminal, the router 1 uses the 160 MHz bandwidth but does not use TxBF. TxBF of the terminal is in the disabled state when the data (the packet) is received.

Step S308 to step S310 are respectively the same as the foregoing step S108 to step S110. For details, refer to the foregoing description of step S108 to step S110. Details are not described herein again.

It should be noted herein that content involved in the foregoing step S301 to step S304 is the same as the content involved in sending an NDP, a CFB, an RTS, and a CTS in the foregoing FIG. 2A and FIG. 2B. Refer to the foregoing description of the related content in FIG. 2A and FIG. 2B. Details are not described herein again. 80 MHz involved in the foregoing step S304 is an example for description. When the channel with the 160 MHz bandwidth is unavailable, the terminal re-detects an available channel. It may be one of 80 MHz, 40 MHz, 20 MHz, and the like. This is not limited in embodiments of this application.

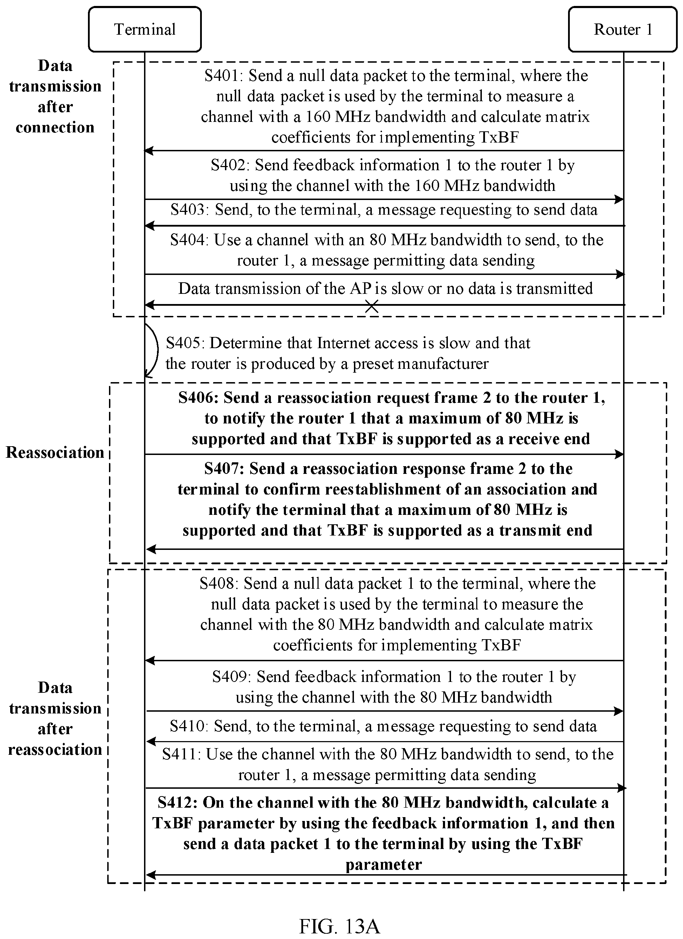

The following further describes the manner 4 with reference to FIG. 13A.

In the manner 4, after a connection is established, if it is recognized that Internet access is slow and that the connected AP is produced by a manufacturer of a faulty AP, the 160 MHz bandwidth on the STA side is disabled. For content involved in the process, refer to the following description of step S401 to step S412.

FIG. 13A illustrates an example in which the STA is a terminal and the AP is a router.

S401: Send a null data packet to the terminal, where the null data packet is used by the terminal to measure a channel with a 160 MHz bandwidth and calculate matrix coefficients for implementing TxBF.

S402: Send feedback information 1 to a router 1 by using the channel with the 160 MHz bandwidth.

S403: Send, to the terminal, a message requesting to send data.

S404: Use a channel with an 80 MHz bandwidth to send, to the router 1, a message permitting data sending.

S405: Determine that Internet access is slow and that the router 1 is produced by a preset manufacturer.

Step S401 to step S405 are respectively the same as the foregoing step S301 to step S305. For details, refer to the foregoing related content. Details are not described herein again.

Subsequently, the terminal performs an reassociation process involved in the following step S406 and step S407 to disable the 160 MHz bandwidth to resolve a slow Internet access problem.

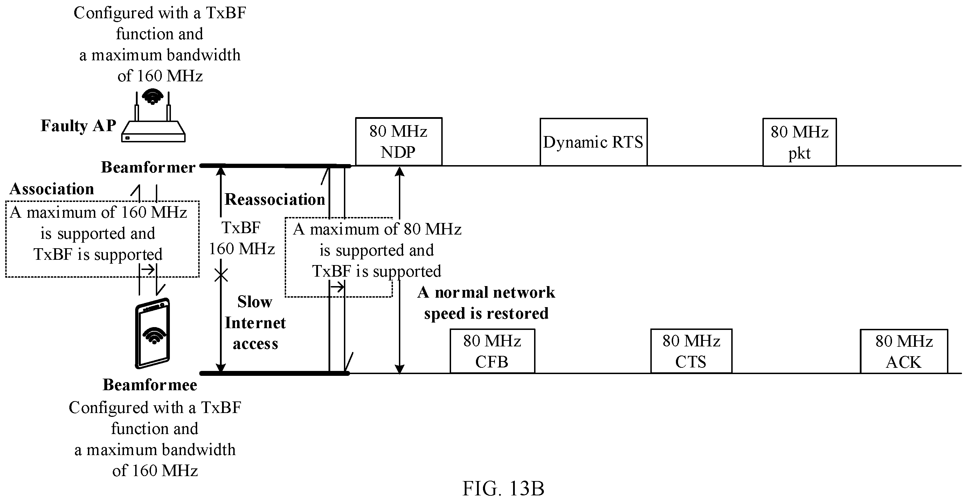

As shown in FIG. 13B, the terminal and the router 1 (a faulty AP) configured with the TxBF function and supporting a maximum bandwidth of 160 MHz negotiate in an association process that both parties support the maximum bandwidth of 160 MHz and support TxBF. After a connection is established, the problem scenario shown in FIG. 2B occurs during data transmission, resulting in a low network speed. In this case, the following step S406 and step S407 may be performed to perform reassociation and renegotiate a maximum bandwidth and a TxBF capability. Herein, a negotiation result is that the maximum bandwidth supported is 80 MHz and that TxBF is supported.

**S406: Send a reassociation request frame 2 to the router 1, to notify the router 1 that a maximum of 80 MHz is supported and that TxBF is supported as a receive end.**

**S407: Send a reassociation response frame 2 to the terminal to confirm reestablishment of an association and notify the terminal that a maximum of 80 MHz is supported and that TxBF is supported as a transmit end.**

With continued reference to FIG. 13B, the negotiation result in step S406 and step S407 is that both parties support the maximum bandwidth of 160 MHz but neither supports TxBF. In this way, during subsequent data transmission, the router 1 no longer uses TxBF on the channel with the 160 MHz bandwidth to send data to the terminal, and a normal network speed can be restored. For the process of data transmission after reassociation, refer to the following description of step S408 to step S412.

For related content involved in step S406 and step S407, refer to the description of the reassociation in FIG. 7. Details are not described herein again.

S408: Send a null data packet 1 to the terminal, where the null data packet is used by the terminal to measure the channel with the 80 MHz bandwidth and calculate matrix coefficients for implementing TxBF.

With reference to FIG. 13B, the terminal and the router 1 negotiate support for a maximum bandwidth of 8 MHz and support for TxBF in the reassociation process. After reassociation, the router 1, as a beamformer (beamformer), may send the null data packet 1 to the terminal as a beamformee (beamforming receive end) on the channel with the 80 MHz bandwidth, where the null data packet 1 may be an 80 MHz NDP. For content about the 80 MHz NDP, refer to the description of the 80 MHz NDP in FIG. 2A. Details are not described herein again.

S409: Send feedback information 1 to the router 1 by using the channel with the 80 MHz bandwidth. With continued reference to FIG. 13B, the feedback information 1 is an 80 MHz CFB. The terminal may return information (for example, an SNR) and steering matrix coefficients of the channel with the 80 MHz bandwidth to the router 1 by using the feedback information 1. For the 80 MHz CFB, refer to the foregoing description of the 160 CFB. It is only necessary to change 160 MHz to 80 MHz. Details are not described herein again.

S410: Send, to the terminal, a message requesting to send data.

With reference to FIG. 13B, the message requesting to send data may be the foregoing dynamic RTS.

S411: Use the channel with the 80 MHz bandwidth to send, to the router 1, a message permitting data sending.

With continued reference to FIG. 13B, when the terminal performs channel detection and determines that the channel with the 80 MHz bandwidth is available, the terminal may notify the router 1 by using an 80 MHz CTS that data can be sent on the channel with the 80 MHz bandwidth.

**S412: On the channel with the 80 MHz bandwidth, calculate a TxBF parameter by using the feedback information 1, and then send a data packet 1 to the terminal by using the TxBF parameter.**

Subsequently, the terminal may receive the data packet 1 on the channel with the 80 MHz bandwidth. When the data packet 1 is received, the TxBF function of the terminal is in the enabled state.

Step S408 to step S412 are respectively the same as the foregoing step S208 to step S212. For details, refer to the foregoing description of step S208 to step S212. Details are not described herein again.

It should be noted herein that a cause of the low network speed in the foregoing step S305 and step S405 is that the maximum supported bandwidth is negotiated as a preset bandwidth (160 MHz bandwidth) and that support for TxBF by both parties is negotiated in the connection establishment process, resulting in the low network speed scenario shown in FIG. 2B. However, in an actual situation, the negotiation about the maximum supported bandwidth as the preset bandwidth (160 MHz bandwidth) and the negotiation about support for TxBF by both parties are not limited to the connection establishment process. The negotiation may alternatively be performed in the reassociation process. Then renegotiation is performed through new reassociation shown in FIG. 12A or FIG. 13A.

In the foregoing content, the Assoc request frame is used to notify the AP that the STA supports a maximum of 160 MHz and does not support TxBF as a receive end. It may be understood that the Assoc request frame carries indication information, where the indication information is used to indicate that the STA supports a maximum of 160 MHz and does not support TxBF as a receive end. Other frames (including the Assoc response frame, and the Reassoc response frame and Reassoc response frame mentioned below) for notification purposes may also be described in this way. For example, the Assoc response frame is used to notify the STA that the AP supports a maximum of 160 MHz and does not support TxBF as a transmit end. It may be understood that the Assoc response frame carries indication information, where the indication information is used to indicate that the AP supports a maximum of 160 MHz and does not support TxBF as a transmit end. The support for a maximum of 160 MHz may also be described as support for 160 MHz. Supporting 160 MHz also means that a bandwidth less than 160 MHz can also be used.

In the foregoing embodiments, the association request frame 1 and the association request frame 2 may be referred to as first association request frames. The association response frame 1 and the association response frame 2 may be referred to as first association response frames. The reassociation request frame 1 and the reassociation request frame 2 may be referred to as first reassociation request frames. The reassociation response frame 1 and the reassociation response frame 2 may be referred to as first reassociation response frames.

The following describes an exemplary block diagram of a structure of a terminal in an embodiment of this application.

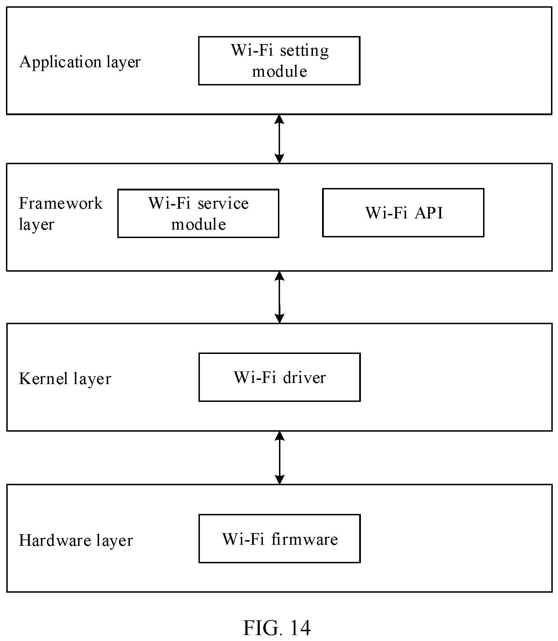

As shown in FIG. 14, the terminal includes software and hardware layers. In a layered architecture, software is divided into several layers, and each layer has a clear role and task. The layers communicate with each other through a software interface. In some embodiments, a software system is divided into three layers: an application layer (application program layer), an application framework layer, and a kernel layer from top to bottom.

The application layer may include a series of application packages, such as a Wi-Fi setting module.

The Wi-Fi setting module may provide setting items related to a Wi-Fi network, for example, enabling or disabling the Wi-Fi network. A communication control method may be applied when the Wi-Fi network is enabled.

The application framework layer provides an application programming interface (application programming interface, API) and a programming framework for applications at the application layer. The application framework layer includes some predefined functions.

The application framework layer may include a Wi-Fi framework layer (not shown). The Wi-Fi framework layer may include a Wi-Fi service module and a Wi-Fi API.

The Wi-Fi framework layer may be used to implement the foregoing connection establishment process and reassociation process.

The Wi-Fi framework layer may be further used to implement signal transmission with a router through an underlying Wi-Fi driver (Wi-Fi driver) and Wi-Fi firmware (Wi-Fi firmware) after a connection is established, including transmission of signals such as the foregoing NDP, RTS, and data packet (data packet).

The kernel layer is a layer between hardware and software. The kernel layer includes at least the Wi-Fi driver.

After receiving an instruction for sending or receiving data from an upper layer, the Wi-Fi driver can drive the Wi-Fi firmware to send or receive data. The Wi-Fi firmware may also be referred to as a Wi-Fi chip.

The following describes an exemplary terminal provided in an embodiment of this application.

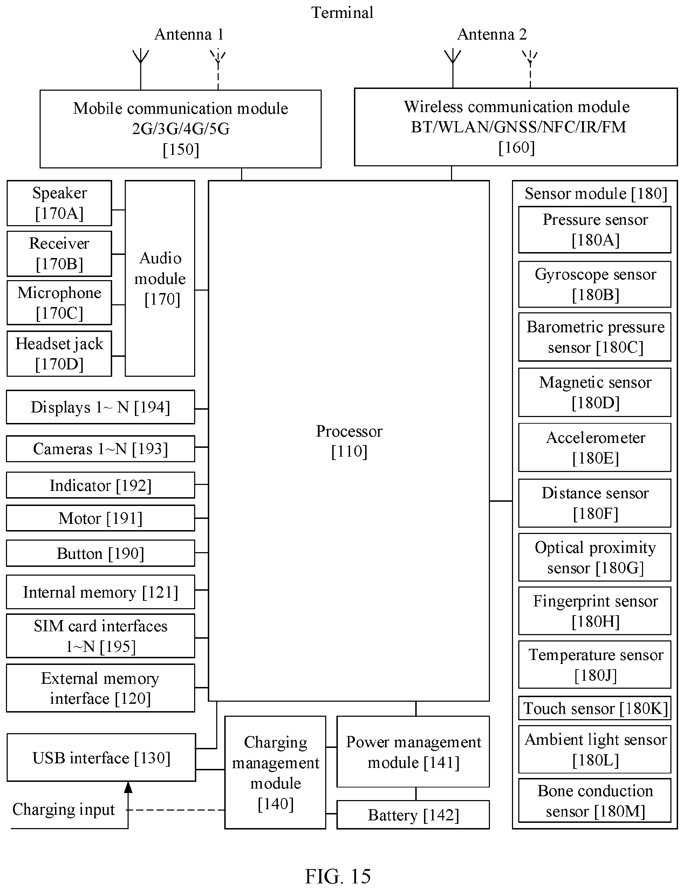

FIG. 15 is a schematic diagram of a structure of a terminal according to an embodiment of this application.

This embodiment is described below in detail by using the terminal as an example. It should be understood that the terminal may have more or fewer components than those shown in FIG. 15, may combine two or more components, or may have different component configurations. The components shown in FIG. 15 may be implemented in hardware including one or more signal processing and/or application-specific integrated circuits, software, or a combination of hardware and software.

The terminal may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like. The sensor module 180 may include a pressure sensor 180A, a gyroscope sensor 180B, a barometric pressure sensor 180C, a magnetic sensor 180D, an accelerometer 180E, a distance sensor 180F, an optical proximity sensor 180G, a fingerprint sensor 180H, a temperature sensor 180J, a touch sensor 180K, an ambient light sensor 180L, a bone conduction sensor 180M, and the like. The processor may include an application processor (Application Processor, AP) and a modem processor (Modem, which may also be referred to as a baseband processor).

The wireless communication module 160 may provide a wireless local area network (wireless local area network, WLAN) (for example, a wireless fidelity (wireless fidelity, Wi-Fi) network) applied on the terminal. The WLAN is implemented by the foregoing Wi-Fi firmware.

It may be understood that the structure illustrated in this embodiment of this application does not constitute a specific limitation on the terminal. In some other embodiments of this application, the terminal may include more or fewer components than those shown in the figure, or some components are combined, or some components are split, or component arrangements are different. The components shown in the figure may be implemented by hardware, software, or a combination of software and hardware.

In this embodiment of this application, the processor 110 may invoke computer instructions stored in the internal memory 121, so that the terminal performs the method in the embodiment of this application.

This application further provides a chip system. The chip system includes at least one processor configured to implement the functions involved in the method performed by the terminal in any one of the foregoing embodiments.

In a possible design, the chip system further includes a memory. The memory is configured to store program instructions and data. The memory is located inside the processor or outside the processor.

The chip system may include a chip, or may include a chip and another discrete component.

Optionally, there may be one or more processors in the chip system. The processor may be implemented by using hardware, or may be implemented by using software. When the processor is implemented by using hardware, the processor may be a logic circuit, an integrated circuit, or the like. When the processor is implemented by using software, the processor may be a general-purpose processor, and is implemented by reading software code stored in the memory.

Optionally, there may also be one or more memories in the chip system. The memory may be integrated with the processor, or may be disposed separately from the processor. This is not limited in embodiments of this application.

For example, the memory may be a non-transitory processor, for example, a read-only memory ROM. The memory and the processor may be integrated on a same chip, or may be separately disposed on different chips. A type of the memory and a manner of disposing the memory and the processor are not specifically limited in embodiments of this application.

For example, the chip system may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a micro controller unit (micro controller unit, MCU), a programmable logic device (programmable logic device, PLD), or another integrated chip.

This application further provides a computer program product. The computer program product includes a computer program (which may also be referred to as code or an instruction). When the computer program is run, a computer is enabled to perform the method performed by the terminal in any one of the foregoing embodiments.

This application further provides a computer-readable storage medium. The computer-readable storage medium stores a computer program (which may also be referred to as code or an instruction). When the computer program is run, a computer is caused to perform the method performed by the terminal in any one of the foregoing embodiments.

As described above, the foregoing embodiments are merely intended to describe the technical solutions in this application, but not intended to limit this application. Although this application is described in detail with reference to the foregoing embodiments, persons of ordinary skills in the art should understand that they may still make modifications to the technical solutions described in the foregoing embodiments or make equivalent replacements to some technical features thereof, without departing from the scope of the technical solutions of the embodiments of this application.

As used in the foregoing embodiments, the term "when" may be interpreted as "if", "after", "in response to determining", or "in response to detecting", depending on the context. Similarly, the phrase "when determining" or "if detecting [the described condition or event]" may be interpreted as "if determining", "in response to determining", "when detecting [the described condition or event]", or "in response to detecting [the described condition or event]", depending on the context.

Terms used in embodiments of this application are merely intended to describe specific embodiments, but are not intended to limit this application. As used in this specification and the appended claims of this application, singular expressions "one", "a/an", "the", "the foregoing", and "this" are intended to also include plural expressions, unless otherwise specified in the context. It should be further understood that the term "and/or" used in this application indicates and includes any or all possible combinations of one or more listed items.

Terms "first" and "second" are used merely for description, and shall not be understood as an indication or implication of relative importance or an implicit indication of a quantity of indicated technical features. Therefore, a feature defined by "first" or "second" may explicitly or implicitly include one or more features. In the description of embodiments of this application, unless otherwise specified, the term "a plurality of" means two or more.

All or some of the foregoing embodiments may be implemented by software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk), or the like.

Persons of ordinary skill in the art may understand that all or some of the procedures of the methods in the foregoing embodiments may be implemented by a computer program instructing related hardware. The program may be stored in a computer-readable storage medium. When the program is executed, the procedures of the methods in the foregoing embodiments may be performed. The storage medium includes any medium that can store program code, such as a ROM, a random access memory RAM, a magnetic disk, or an optical disc.

## Claims

1. A communication control method, applied to a terminal, wherein the terminal supports a preset bandwidth and a transmit beamforming TxBF technology, and the method comprises:
receiving, by the terminal, a probe response frame sent by a router, wherein the probe response frame carries an organization unique identifier OUI of the router and a bandwidth supported by the router being a first bandwidth, and the router supports the preset bandwidth and supports the TxBF technology;
when the OUI is a preset OUI and the first bandwidth is equal to the preset bandwidth, sending, by the terminal, a first association request frame to the router; and
receiving, by the terminal, a first association response frame sent by the router in response to the first association request frame, wherein
the first association request frame carries first indication information, wherein the first indication information is used to indicate that a maximum bandwidth supported by the terminal is the preset bandwidth and that the terminal does not support the TxBF technology; or
the first indication information is used to indicate that a maximum bandwidth supported by the terminal is a second bandwidth and that the terminal supports the TxBF technology, wherein the second bandwidth is less than the preset bandwidth.

2. The method according to claim 1, wherein the first association response frame carries second indication information; and
when the first indication information is used to indicate that the maximum bandwidth supported by the terminal is the preset bandwidth and that the terminal does not support the TxBF technology, the second indication information is used to indicate that a maximum bandwidth supported by the router is the preset bandwidth and that the router does not support the TxBF technology; or
when the first indication information is used to indicate that the maximum bandwidth supported by the terminal is the second bandwidth and that the terminal supports the TxBF technology, the second indication information is used to indicate that a maximum bandwidth supported by the router is the second bandwidth and that the router supports the TxBF technology.

3. The method according to claim 1 or 2, wherein before the sending, by the terminal, a first association request frame to the router, the method further comprises:
determining, by the terminal, that the probe response frame further carries information used to indicate that the router supports the TxBF technology.

4. A communication control method, applied to a terminal, wherein the terminal supports a preset bandwidth and a transmit beamforming TxBF technology, and the method comprises:
establishing, by the terminal, a first connection to a router, wherein the router supports the preset bandwidth and supports the TxBF technology, and when the terminal receives, through the first connection, data sent by the router, the TxBF technology of the terminal is in an enabled state, and a maximum bandwidth used by the terminal is the preset bandwidth;
when a first condition is met, sending, by the terminal, a first reassociation request frame to the router, wherein the first condition comprises that communication quality between the terminal and the router is lower than a preset level; and
receiving, by the terminal, a first reassociation response frame sent by the router in response to the first reassociation request frame, wherein
the first reassociation request frame carries third indication information, wherein the third indication information is used to indicate that a maximum bandwidth supported by the terminal is the preset bandwidth and that the terminal does not support the TxBF technology; or
the third indication information is used to indicate that a maximum bandwidth supported by the terminal is a second bandwidth and that the terminal supports the TxBF technology, wherein the second bandwidth is less than the preset bandwidth.

5. The method according to claim 4, wherein the first reassociation response frame carries fourth indication information; and
when the third indication information is used to indicate that the maximum bandwidth supported by the terminal is the preset bandwidth and that the terminal does not support the TxBF technology, the fourth indication information is used to indicate that a maximum bandwidth supported by the router is the preset bandwidth and that the router does not support the TxBF technology; or
when the third indication information is used to indicate that the maximum bandwidth supported by the terminal is the second bandwidth and that the terminal supports the TxBF technology, the fourth indication information is used to indicate that a maximum bandwidth supported by the router is the second bandwidth and that the router supports the TxBF technology.

6. The method according to claim 4 or 5, wherein after the receiving, by the terminal, a first reassociation response frame sent by the router, the method further comprises:
establishing, by the terminal, a second connection to the router, wherein
when the third indication information is used to indicate that the maximum bandwidth supported by the terminal is the preset bandwidth and that the terminal does not support the TxBF technology, when data sent by the router is received through the second connection, a TxBF function of the terminal is in a disabled state, and the maximum bandwidth used by the terminal is the preset bandwidth; or
when the third indication information is used to indicate that the maximum bandwidth supported by the terminal is the second bandwidth and that the terminal supports the TxBF technology, when data sent by the router is received through the second connection, a TxBF function of the terminal is in an enabled state, and the maximum bandwidth used by the terminal is the second bandwidth.

7. The method according to any one of claims 4 to 6, wherein before the establishing, by the terminal, a first connection to the router, the method further comprises:
receiving, by the terminal, a probe response frame sent by the router, wherein the probe response frame carries an organization unique identifier OUI of the router and a bandwidth supported by the router being a first bandwidth;
sending, by the terminal, a second association request frame to the router; and
receiving, by the terminal, a second association response frame sent by the router in response to the second association request frame, wherein
the second association request frame carries fifth indication information, wherein the fifth indication information is used to indicate that the maximum bandwidth supported by the terminal is the preset bandwidth and that the terminal supports the TxBF technology.

8. The method according to claim 7, wherein the first condition further comprises that the OUI of the router is a preset OUI and that the first bandwidth is equal to the preset bandwidth.

9. The method according to any one of claims 4 to 8, wherein the method further comprises:
before determining that the first condition is met, receiving, by the terminal through the first connection, a request to send frame sent by the router, wherein the request to send frame is used to request to use the preset bandwidth to send a first data packet to the terminal; and
sending, by the terminal, a clear to send frame to the router through the first connection, wherein the clear to send frame is used to notify the router to use the second bandwidth to send the first data packet.

10. The method according to claim 9, wherein that communication quality between the terminal and the router is lower than a preset level specifically comprises:
after the terminal sends the clear to send frame to the router, the terminal does not receive the first data packet within a preset time.

11. The method according to any one of claims 4 to 10, wherein that communication quality between the terminal and the router is lower than a preset level specifically comprises:
the terminal determines that a packet loss rate of a second data packet is greater than a preset packet loss rate, wherein the second data packet is a data packet received by the terminal through the first connection.

12. The method according to any one of claims 1 to 11, wherein the preset bandwidth is a 160 MHz bandwidth.

13. The method according to any one of claims 2 to 12, wherein the second bandwidth is one of an 80 MHz bandwidth, a 40 MHz bandwidth, or a 20 MHz bandwidth.

14. A terminal, comprising one or more processors and a memory, wherein the memory is coupled to the one or more processors, the memory is configured to store computer program code, the computer program code comprises computer instructions, and the one or more processors invoke the computer instructions, so that the terminal performs the method according to any one of claims 1 to 13.

15. A computer-readable storage medium, comprising computer instructions, wherein when the computer instructions are run on a terminal, the terminal is enabled to perform the method according to any one of claims 1 to 13.

16. A chip system, wherein the chip system is applied to a terminal, the chip system comprises one or more processors, and the processor is configured to invoke computer instructions, so that the terminal performs the method according to any one of claims 1 to 13.
